# EUROPEAN PATENT APPLICATION

(11) **EP 4 613 549 A2**
(43) Date of publication of application: **10.09.2025**
(21) Application number: 25190740.8
(22) Date of filing: 22.07.2022
(51) Int. Cl.: B60N 2/28

(54) **CHILD SAFETY SEAT**

(30) Priority: 23.07.2021 CN 202110842602; 01.07.2022 CN 202210775314
(62) Divisional of application: 22747712.2
(71) Applicant: Wonderland Switzerland AG, 6312 Steinhausen (CH)
(72) Inventor: MO, Xiaolong, 6312 Steinhausen (CH)
(74) Representative: Pfenning, Meinig & Partner mbB

(57) **Abstract**

The present invention provides a child safety seat including a base and a supporting leg movably assembled on the base. The supporting leg includes a sliding seat slidably disposed on the base, and a stand pivotally connected relative to the sliding seat and having an unfolded position and a folded position. The base is provided with an accommodating space for accommodating the stand in a folded state.

## Description

### TECHNICAL FIELD

The present invention relates to the field of children products, in particular to a child safety seat.

### BACKGROUND

In order to maximize the riding safety of motor vehicles, 0-12 years old children usually use child safety seats, so that child safety seats are increasingly popular.

The child safety seat needs to be fixed with a vehicle seat when it is in use, and it is usually fixed by an ISOFIX telescopic mechanism having a telescopic structure which facilitates to fixedly connect the child safety seat with different vehicles. In addition, in front of a child safety seat, a supporting leg extending to a bottom of the vehicle may be added to prevent the safety seat from overturning and reduce a forward displacement that may occur during collision.

In the existing child safety seat, on the one hand, when the supporting leg is not used and then folded under the base, there is no space to accommodate the supporting leg in the base, so that the supporting leg will protrude from underside of the base, and thus the child safety seat cannot be stably placed on the vehicle; and on the other hand, due to the structural design of the ISOFIX telescopic mechanism, the unlocking operating element assembled on the supporting leg cannot adjust the ISOFIX telescopic mechanism because of activities of the supporting leg, so that an unlocking operating element of the ISOFIX telescopic mechanism may only be disposed on the base and cannot be assembled at the supporting leg movably disposed on the base. In addition, the existing ISOFIX telescopic mechanism also has a defect, i.e., its structure is complicate. Document CN 110 979 114 A relates to a child automobile safety seat base. The document does not relate to a bottom of a base being provided with a clamping part, a lower end of a stand being provided with a matching part matched with the clamping part, and the clamping part being clamped with the matching part when a sliding seat drives the stand in the folded position to slide backwards by a predetermined distance. Further prior art can be found, e.g., in document CN 109 398 174.

### SUMMARY

The invention is defined by the claims. An aspect of the present invention provides a child safety seat, in which a base is provided with an accommodating space to avoid and accommodate a supporting leg in a folded state. Therefore, when the supporting leg is in a folded state through a sliding seat thereof, the accommodating space may be configured to accommodate the supporting leg.

In an embodiment, the child safety seat may include a base and a supporting leg movably assembled on the base. The supporting leg may include a stand and a sliding seat slidably disposed on the base. The stand may be pivotally connected relative to the sliding seat and have an unfolded position and a folded position. The base may have an accommodating space for accommodating the stand in the folded position.

In an embodiment, the supporting leg may slide along a front-back direction of the base.

In an embodiment, the stand may slide along the front-back direction of the base in the accommodating space when it is in the folded position.

In an embodiment, the accommodating space may be an accommodating recess recessed from an underside of the base.

In an embodiment, a cross section of the accommodating space in a direction perpendicular to the base may be in an inverted U-shape.

In an embodiment, the stand may be switched between the unfolded position and the folded position by moving the sliding seat relative to the base forwards and backwards.

In an embodiment, the child safety seat may further include a fixing bracket, a stroke enlarging structure and a tension spring. The fixing bracket is erected on the base. The stroke enlarging structure may have an X-shaped cross-folding mechanism. An end of the X-shaped cross-folding mechanism may be installed on the fixing bracket, and the other end of the X-shaped cross-folding mechanism may be installed on the sliding seat. The tension spring may be disposed between the base and the sliding seat, and may constantly have a tendency to pull the sliding seat outwards.

In an embodiment, a bottom of the base may be provided with a clamping part located right behind the stand, a lower end of the stand may be provided with a matching part matched with the clamping part, and the clamping part may be clamped with the matching part when the sliding seat drives the stand in the folded position to slide backwards by a predetermined distance.

In an embodiment, the sliding seat of the supporting leg may be located at a middle portion of a front end of the base, and the accommodating space may extend from the middle portion of the front end of the base to accommodate the stand in the folded position.

In another aspect of the present invention, an ISOFIX assembly (also referred to as "ISOFIX telescopic adjusting device") may also be provided. The ISOFIX assembly may be disposed on a child safety seat, such as the child safety seat as described above.

In an embodiment, the ISOFIX assembly may include an ISOFIX connector, a locking element, an unlocking operating element and a link assembly which is self-adaptive. The ISOFIX connector may be telescopically and slidably assembled on the base and may be provided with a plurality of slot structures which are arranged at intervals along the telescopic direction. The locking element may be movably disposed on the base and may have a first position and a second position relative to the base. The locking element may be locked with one of the slot structures when it is in the first position, and may be unlocked with the one of the slot structures when it is in the second position. The unlocking operating element may be movably disposed on the supporting leg. The link assembly may be connected to both the unlocking operating element and the locking element, and the link assembly may be self-adaptive to adjust during the movement of the supporting leg relative to the base, so that the unlocking operating element may be linked with the locking element and enable the locking element to be switched between the first position and the second position via the link assembly.

In an embodiment, the self-adaptive link assembly may include a traction element and a holder. The flexible traction element may be connected to the unlocking operating element and the locking element, and deformed during the movement of the supporting leg relative to the base. The holder may be configured to tighten deformation of the traction element, and the unlocking operating element may be linked with the locking element and enable the locking element to be switched from the first position to the second position via the traction element with assistance of the holder.

In an embodiment, the holder may be a wire sleeve having a first end fixedly connected with the base and a second end fixedly connected with the supporting leg. The traction element may slidably penetrate through the wire sleeve, an end of the traction element may extend out of the wire sleeve and be assembled with the locking element, and the other end of the traction element may extend out of the wire sleeve and be assembled with the unlocking operating element. Both the traction element and the wire sleeve may be synchronously deformed during the movement of the supporting leg relative to the base.

In an embodiment, the holder may be a pivoting biasing structure that biases the traction element, and the pivoting biasing structure may be pivotally assembled on the base and bias a part of the traction element between the unlocking operating element and the locking element from a single side.

In an embodiment, the ISOFIX assembly of the present invention may further include an elastic restoring element disposed between the base and the locking element, and the elastic restoring element may constantly have a tendency to drive the locking element to be switched to the first position.

In an embodiment, a sliding direction of the locking element and a telescopic direction of the ISOFIX connector may be perpendicular to each other.

In an embodiment, the ISOFIX assembly may further include a first fixing seat assembled on the base and a second fixing seat assembled on the supporting leg, the first fixing seat may be separated from the second fixing seat along a telescopic direction of the ISOFIX connector and a sliding direction of the locking element respectively. The first fixing seat may be provided with an embedded avoidance cavity arranged along the sliding direction of the locking element, a first embedded fixing cavity obliquely arranged relative to the telescopic direction of the ISOFIX connector, and a middle channel communicating the embedded avoidance cavity and the first embedded fixing cavity. The second fixing seat may be provided with a second embedded fixing cavity. The elastic restoring element may be placed in the embedded avoidance cavity. A first end of the wire sleeve may be assembled in the first embedded fixing cavity, and a second end of the wire sleeve may be assembled in the second embedded fixing cavity. A part of the traction element extending out of the first end of the wire sleeve may also penetrate through the middle channel.

In an embodiment, the second embedded fixing cavity may include a straight segment arranged along the telescopic direction of the ISOFIX connector and an inclined portion obliquely arranged relative to the telescopic direction of the ISOFIX connector and communicated with the straight segment, the inclined portion may be located between the straight segment and the first fixing seat along the telescopic direction of the ISOFIX connector.

In an embodiment, two ISOFIX connectors may be separated from each other and arranged side by side along the sliding direction of the locking element, each of the ISOFIX connectors may correspond to one locking element, one elastic restoring element, one first fixing seat, one traction element and one wire sleeve, and all of locking elements, elastic restoring elements and first fixing seats may be located in a space enclosed by the two ISOFIX connectors. Two second embedded fixing cavities of the second fixing seat may be provided, and the second end of each of wire sleeves may be assembled in a corresponding one of the second embedded fixing cavities.

In an embodiment, two first fixing seats may be symmetrically arranged with the second fixing seat as a center.

In an embodiment, the ISOFIX assembly of the present invention may further include an intermediate synchronizing element for fixing two ISOFIX connectors together.

In an embodiment, the ISOFIX assembly of the present invention may further include a first reinforcing element and a second reinforcing element. A first end of the intermediate synchronizing element may fixedly support one of the ISOFIX connectors from below, and a second end of the intermediate synchronizing element may fixedly support the other of the ISOFIX connectors from below. The first reinforcing element may penetrate through the base, the intermediate synchronizing element and the ISOFIX connector supported by the first end of the intermediate synchronizing element along the sliding direction of the locking element. The second reinforcing element may penetrate through the base, the intermediate synchronizing element and the ISOFIX connector supported by the second end of the intermediate synchronizing element along the sliding direction of the locking element. The base may be provided with a first avoidance slip groove configured for the first reinforcing element to penetrate through and provide avoidance, and a second avoidance slip groove configured for the second reinforcing element to penetrate through and providing avoidance.

In an embodiment, the ISOFIX assembly of the present invention may further include a first connecting block and a second connecting block located between the two ISOFIX connectors along the sliding direction of the locking element. The first reinforcing element may also penetrate through the first connecting block, and the second reinforcing element may also penetrate through the second connecting block.

In an embodiment, each of the first connecting block and the second connecting block may be connected and assembled with the intermediate synchronizing element through a first screw, the first connecting block may lock the first reinforcing element through a second screw, and the second connecting block may lock the second reinforcing element through a third screw.

In an embodiment, a part of the intermediate synchronizing element between the first end and the second end thereof may have an inverted U-shaped structure, and the first connecting block and the second connecting block may be located in a space of the inverted U-shaped structure.

To achieve the above objects, the child safety seat of the present invention may include a base, supporting leg movably assembled on the base, and the aforementioned ISOFIX assembly.

In an embodiment, the supporting leg may be slidably or pivotally disposed on the base.

In an embodiment, the supporting leg and the unlocking operating element may slide along the front-back direction of the base, and the ISOFIX connector may slide out or slide into a rear end of the base along the front-back direction of the base.

In an embodiment, the supporting leg may include a stand and a sliding seat pivotally connected with the stand, the sliding seat may be slidably disposed on the base, the stand may be pivotally connected with the sliding seat to have an unfolded position and a folded position, and the stand may be folded below the base when it is in the folded position.

In an embodiment, a bottom of the base may be provided with a clamping part located right behind the stand, a lower end of the stand may be provided with a matching part matched with the clamping part, and the clamping part may be clamped with the matching part when the sliding seat drives the stand in the folded position to slide backwards by a predetermined distance.

In an embodiment, the supporting leg may be located at the middle portion of the front end of the base, and the ISOFIX connectors may be separated from the supporting leg along a left-right direction of the base.

In another embodiment of the present invention, the ISOFIX assembly may include two ISOFIX connectors and an intermediate synchronizing element. The two ISOFIX connectors may be telescopically and slidably assembled on both sides of the base. The intermediate synchronizing element may be transversely fixed between the two ISOFIX connectors, so that the two ISOFIX connectors may move synchronously. The intermediate synchronizing element may be configured to have an avoidance space for accommodating the supporting leg in a folded state.

In an embodiment, the avoidance space may be formed by arching a middle part of the intermediate synchronizing element upwards.

In an embodiment, the intermediate synchronizing element may be in an inverted U-shape, and form the avoidance space at its middle part.

In an embodiment, the ISOFIX assembly may further include a telescopic adjusting mechanism, wherein the telescopic adjusting mechanism may include a link assembly, a locking element and an unlocking operating element. The link assembly may be installed on the base. The locking element may be disposed on the link assembly and may move relative to the base between a first position and a second position. The two ISOFIX connectors may be locked relative to the base when the locking element is in the first position, and the two ISOFIX connectors may slide relative to the base when the locking element is in the second position. The link assembly may be connected between the locking element and the unlocking operating element, and the locking element may be switched between the first position and the second position via the link assembly when the unlocking operating element is operated.

In an embodiment, a sliding direction of the two ISOFIX connectors and a moving direction of the locking element may be perpendicular to each other.

In an embodiment, the telescopic adjusting mechanism may further include an elastic restoring element disposed between the base and the locking element, and the elastic restoring element may constantly have a tendency to drive the locking element to be switched to the first position.

In an embodiment, the unlocking operating element may include a first unlocking operating element and a second unlocking operating element which are symmetrically disposed on both sides of the base. The locking element may move from the first position to the second position when the unlocking operating element is driven, so as to allow positions of the two ISOFIX connectors relative to the base to be adjusted, and the locking element may return to the first position under an action of the elastic restoring element when the unlocking operating element is released.

In an embodiment, the link assembly may include a connecting element, a linkage portion and a beam. The beam may be erected on the base and located between the two ISOFIX connectors. The connecting element may be slidably disposed on the beam, and include a first connecting element and a second connecting element. An end of the first connecting element may be connected with the first unlocking operating element, and an end of the second connecting element may be connected with the second unlocking operating element. The linkage portion may be movably disposed on the beam, and may be hinged with the other end of the first connecting element and the other end of the second connecting element, so that the linkage portion may be switched between a retracted state and an expanded state by driving and releasing at least one of the first unlocking operating element and the second unlocking operating element.

In an embodiment, the linkage portion may be a four-bar linkage mechanism.

In an embodiment, the beam may be symmetrically provided with sliding grooves along a longitudinal direction each of which is extended transversely, and the other end of the first connecting element and the other end of the second connecting element may move along corresponding sliding grooves, respectively.

In an embodiment, the linkage portion may be disposed in a horizontal direction.

In an embodiment, the ISOFIX connector may slide out or slide into a rear end of the base along the front-back direction of the base.

In an embodiment, a shape of the avoiding space may correspond to that of the accommodating space.

### BRIEF DESCRIPTION OF THE DRAWINGS

FIG. 1 is a perspective structural schematic view of a child safety seat according to an embodiment of the present invention in which a stand is pivoted to an unfolded position.
FIG. 2 is a plan structure schematic view of the child safety seat shown in FIG. 1 after the ISOFIX connectors slide out of a rear end of a base and the stand slides forward.
FIG. 3 is a perspective structural schematic view of the child safety seat shown in FIG. 1 in which a part of the base is hidden and a locking element is located at a first position.
FIG. 4 is a perspective structural schematic view of FIG. 3 in which a sliding seat is hidden and an elastic restoring element is exposed.
FIG. 5 is a perspective structural schematic view of the locking element shown in FIG. 4 when it is switched to a second position.
FIG. 6 is a perspective structural schematic view of the child safety seat shown in FIG. 1 as viewed from below in which the stand is pivoted to the folded position.
FIG. 7 is a perspective structural schematic view of the child safety seat shown in FIG. 6 in which a clamping part is clamped with a matching part of the stand.
FIG. 8 is an internal structural schematic view taken along a line C-C in FIG. 7.
FIG. 9 shows a side view of a child safety seat according to another embodiment of the present invention in which a supporting leg is not used and the ISOFIX connectors do not extend out of the base.
FIG. 10 shows a side view of a child safety seat according to another embodiment of the present invention in which the supporting leg is used and the ISOFIX connectors do not extend out of the base.
FIG. 11 shows a perspective view of the base of the child safety seat of FIG. 10, in which the stand slides forward and is pivoted to the unfolded position.
FIGS. 12 to 14 show perspective structural schematic views of the child safety seat of FIG. 11 in which a housing of the base is hidden and the locking element is in the second position, wherein the ISOFIX connectors are fully retracted into the base as shown in FIG. 12, they are in the middle of a stroke of sliding outward from the base as shown in FIG. 13, and they fully extend out of the base as shown in FIG. 14.
FIG. 15 shows a partial enlarged view of a telescopic adjusting mechanism of FIG. 13.
FIGS. 16 and 17 show a perspective sectional view and a front sectional view of the telescopic adjusting mechanism, respectively, and the sectional views are taken along a longitudinal centerline of a beam of a link assembly shown in FIG. 13.
FIG. 18 is a schematic view of the link assembly of the telescopic adjusting mechanism when the unlocking operating element is driven.
FIG. 19 is a schematic view of the link assembly of the telescopic adjusting mechanism when the unlocking operating element is released.

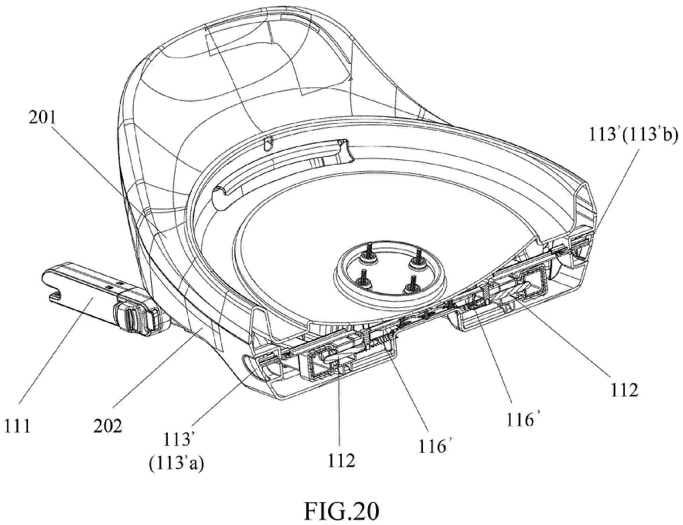

FIGS. 20 and 21 show a perspective sectional view and a front sectional view in which the telescopic adjusting mechanism of FIG. 16 is assembled in the base and the unlocking operating element is released.
FIG. 22 shows a front sectional view of FIG. 16 in which the telescopic adjusting mechanism is assembled in the base and the unlocking operating element is driven.
FIGS. 23 and 24 show a perspective sectional view and a front sectional view, respectively, of the intermediate synchronizing element taken along a longitudinal centerline (i.e., a D-D line) of the intermediate synchronizing element shown in FIG. 13.
FIG. 25 is a schematic top view of the internal structure of the child safety seat in which an upper cover of the base is hidden and the supporting leg is not used.
FIG. 26 is a schematic top view of the internal structure of the child safety seat in which the upper cover of the base is hidden and the supporting leg is used.
FIG. 27 is a schematic top view of the internal structure of the child safety seat in which the upper cover of the base and the fixing bracket are hidden and the supporting leg is used.
FIG. 28 shows a perspective schematic bottom view of the child safety seat when the supporting leg is used.
FIG. 29 is a perspective schematic bottom view of the child safety seat when the supporting leg is not used.
FIG. 30 shows an internal structural schematic view taken along the longitudinal centerline of the intermediate synchronizing element when the supporting leg is folded and the ISOFIX connectors are retracted.

### List of Reference Numbers:

1 Child Safety Seat
   10 ISOFIX Assembly
      111 ISOFIX Connector
         111a Slot Structure
      100 Telescopic Adjusting Mechanism
      112 Locking Element
      113, 113' Unlocking Operating Element
         113'a First Unlocking Operating Element
         113'b Second Unlocking Operating Element
      10a Link Assembly
         114 Traction Element
            114a An End Of Traction Element
            114b The Other End Of Traction Element
         115 Holder
            115a First End Of Wire Sleeve
            115b Second End Of Wire Sleeve
      10a' Link assembly
         101 Connecting Element
            101a First Connecting Element
            101b Second Connecting Element
         102 Linkage Portion
         103 Beam
      116, 116' Elastic Restoring Element
      117 First Fixing Seat
         117a Embedded Avoidance Cavity
         117b First Embedded Fixing Cavity
         117c Middle Channel
      118 Second Fixing Seat
         118a Second Embedded Fixing Cavity
         1181 Straight Segment
         1182 Inclined Portion
      119 Intermediate Synchronizing Element
         119a First End Of Intermediate Synchronizing Element
         119b Second End Of Intermediate Synchronizing Element
         119c Avoidance Space
      120 First Reinforcing Element
         120a First Avoidance Slip Groove
      121 Second Reinforcing Element
         121a Second Avoidance Slip Groove
      122 First Connecting Block
      123 Second Connecting Block
      124 First Screw
      125 Second Screw
      126 Third Screw
   20 Base
      201 Upper Cover
      202 Lower Cover
      210 Clamping Part
      220 Base Bracket
      230 Fixing Bracket
      240 Reinforcing Sheet
      250 Accommodating Recess
   30 Supporting Leg
      310 Stand
         310a Matching Part
      320 Sliding Seat
      330 Stroke Enlarging Structure
      340 Tension Spring
      350 Supporting Leg Bracket
      360 Driving Steel Wire
      370 Touchdown Indicator

### DETAILED DESCRIPTION

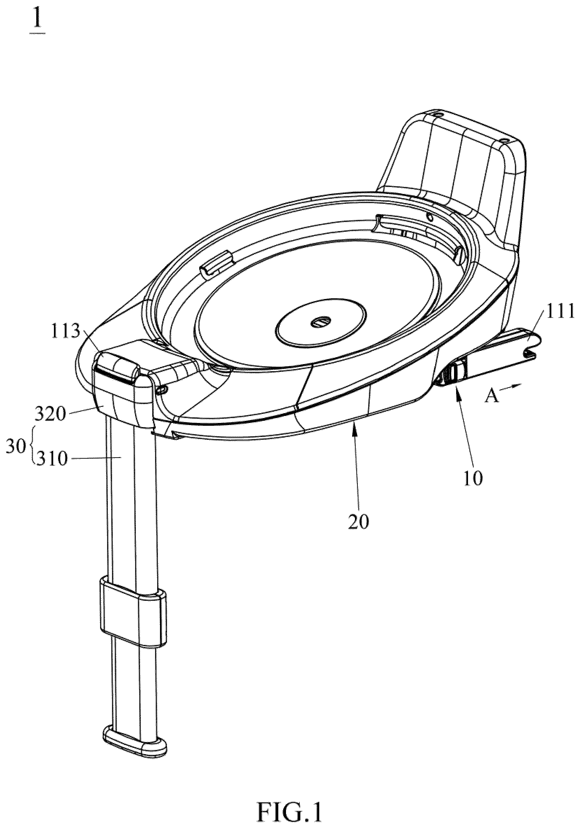

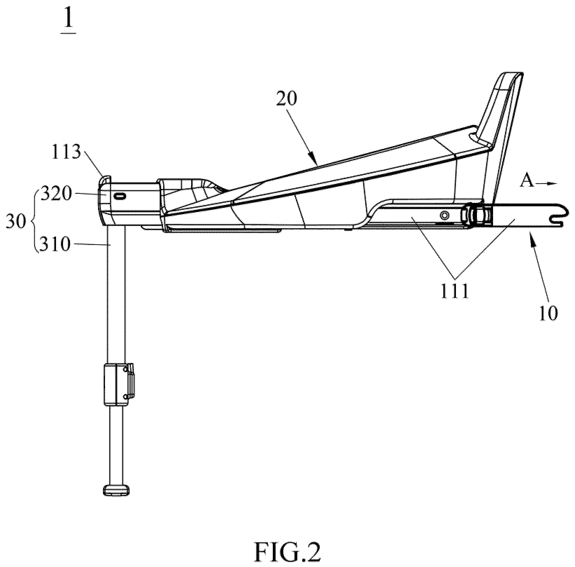

An embodiment of the present invention provides a child safety seat, referring to FIGS. 1 and 2. The child safety seat 1 includes an ISOFIX assembly 10 (also referred to as "ISOFIX telescopic adjusting device"), a base 20 and a supporting leg 30 slidably assembled on the base 20, so that the supporting leg 30 is slidably adjusted on the base 20 according to practical requirements. Specifically, the supporting leg 30 slide along a front-back direction of the base 20, so that an operator may adjust a position of the supporting leg 30 along the front-back direction of the base 20, thereby changing a supporting position of the supporting leg 30 to the base 20. The detailed description will be described as follows.

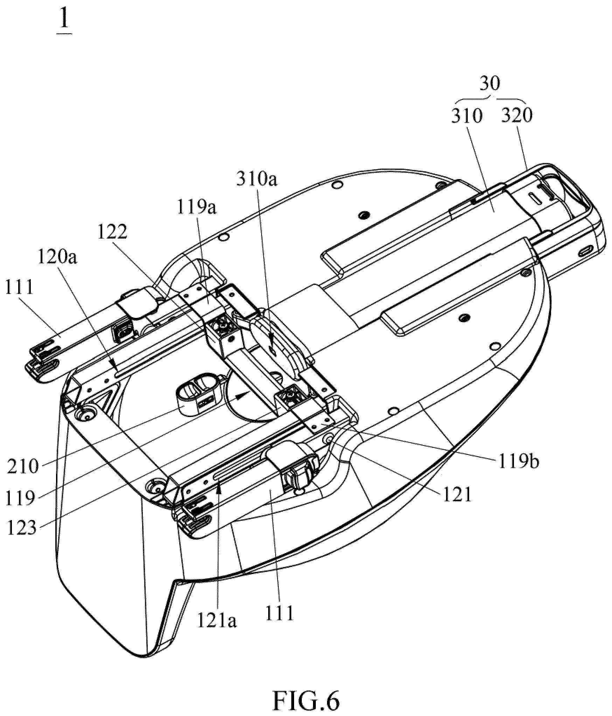

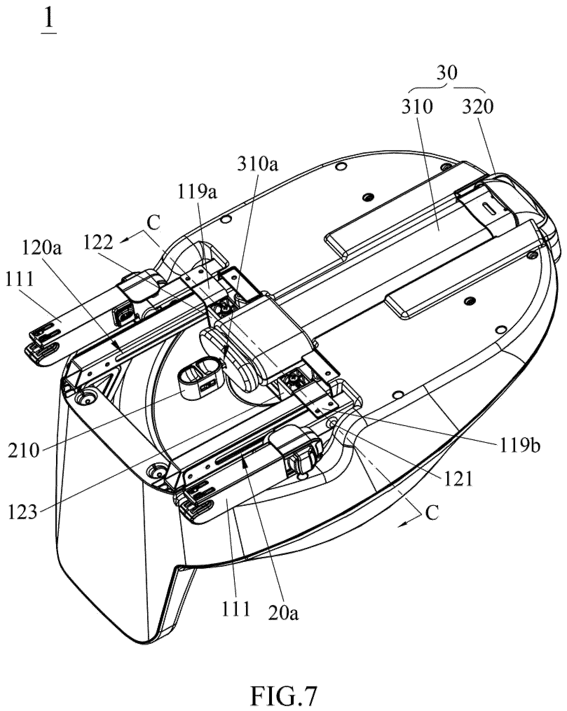

As shown in FIGS. 1-3 and 6-8, the supporting leg 30 is located at a middle portion of a front end of the base 20 to provide more reliable support for a front end of the base 20. Specifically, in FIGS. 1-3 and 6-7, the supporting leg 30 includes a stand 310 and a sliding seat 320 pivotally connected to the stand 310. The sliding seat 320 is slidably disposed on the base 20, and the stand 310 is pivotable relative to the sliding seat 320 to have an unfolded position as shown in FIGS. 1-5 and a folded position as shown in FIGS. 6-7. The stand 310 is folded under the base 20 when it is in the folded position as shown in FIGS. 6-7, and a state thereof is shown in FIGS. 6-7. This design makes the child safety seat 1 of the present invention occupy less space after the stand 310 is folded, and it is convenient for storage and transportation. More specifically, as shown in FIGS. 6 and 7, a bottom of the base 20 is provided with a clamping part 210 located right behind the stand 310, and a lower end of the stand 310 is provided with a matching part 310a matched with the clamping part 210. The clamping part 210 is clamped with the matching part 310a when the sliding seat 320 drives the stand 310 in the folded position as shown in FIG. 6 to slide backward by a predetermined distance, which predetermined distance is flexibly set as required. For example, the matching part 310a is a groove structure or a hole structure, which is not limited thereto. It can be understood that, according to the actual requirements, the supporting leg 30 may not be folded, that is, the stand 310 and the sliding seat 320 of the supporting leg 30 cannot be folded relative to each other, and thus it is not limited by the above description.

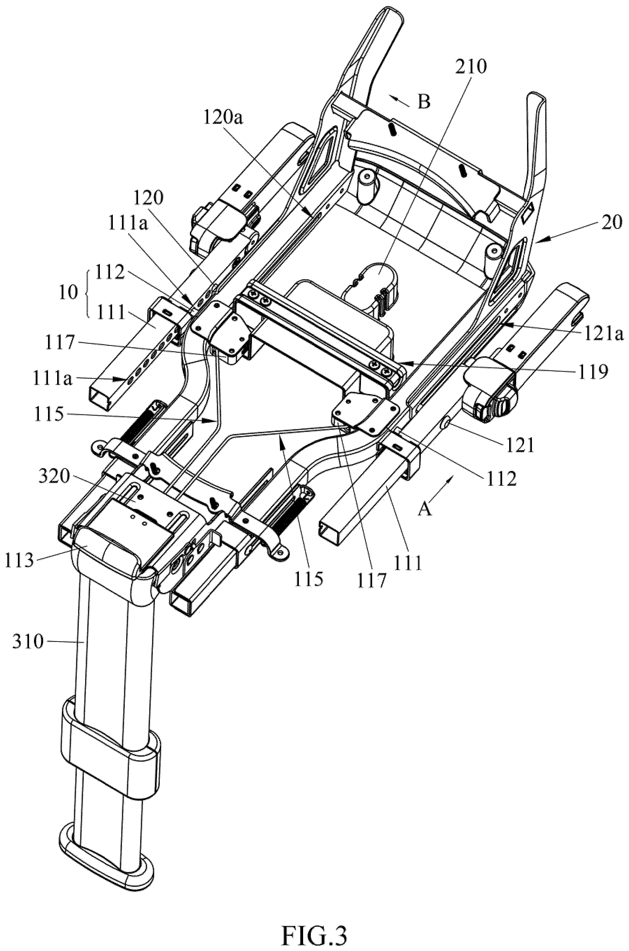

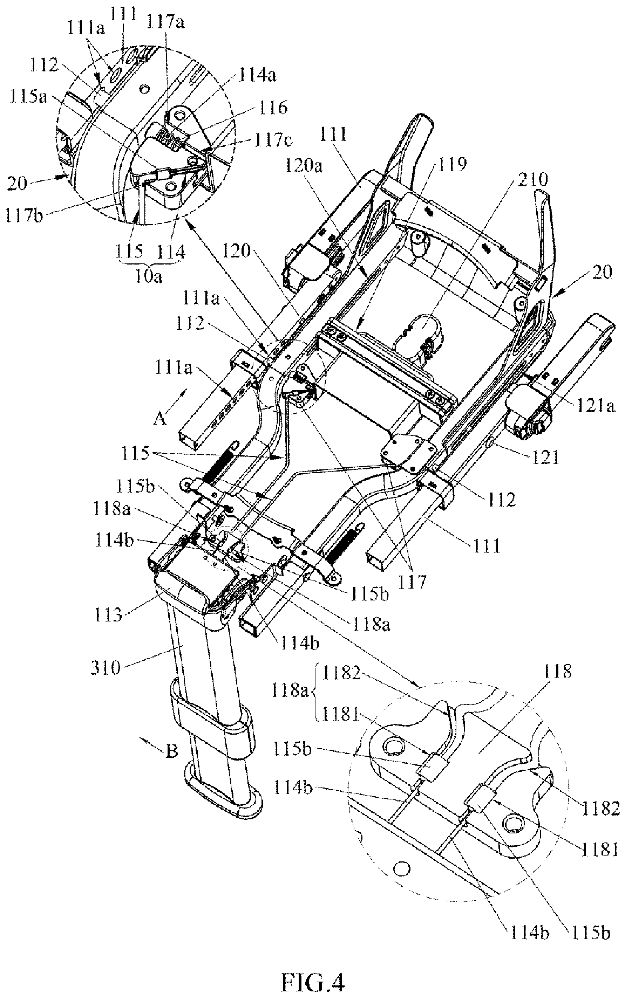

As shown in FIGS. 2 to 5, the ISOFIX assembly 10 includes an ISOFIX connector 111, a locking element 112, an unlocking operating element 113, a traction element 114 and a holder 115. For example, the traction element 114 is flexible. The ISOFIX connector 111 is telescopically and slidably assembled on the base 20. For example, the ISOFIX connector 111 is configured to slide out or slide into a rear end of the base 20 along a front-back direction of the base 20, so as to be detachably connected with a vehicle seat (e.g., a car seat) from the back of the base 20 through the ISOFIX connector 111, and the ISOFIX connector 111 is separated from the supporting leg 30 along a left-right direction of the base 20, which is not limited thereto. Also, the ISOFIX connector 111 is provided with a plurality of slot structures 111a arranged at intervals along a telescopic direction of the ISOFIX connector 111 (i.e., parallel to a direction indicated by an arrow A), so that the ISOFIX connector 111 may be located in different positions by locking the locking element 112 with different slot structures 111a. The locking element 112 is movably disposed on the base 20 and has a first position as shown in FIG. 3 and a second position as shown in FIG. 4 relative to the base 20. The locking element 112 is locked with one of the slot structures 111a when the locking element 112 is in the first position as shown in FIG. 3, so as to lock the ISOFIX connector 111 relative to the base 20. The locking element 112 is unlocked with the corresponding slot structure 111a when the locking element 112 is in the second position, so as to unlock the ISOFIX connector 111 and allow the ISOFIX connector 111 to slide relative to the base 20. For example, as shown in FIGS. 3 and 4, a sliding direction of the locking element 112 (i.e., parallel to a direction indicated by an arrow B) and the telescopic direction of the ISOFIX connector 111 (i.e., parallel to the direction indicated by the arrow A) are perpendicular to each other, so as to ensure that the locking element 112 and the slot structure 111a are locked reliably, however, it is not limited by the present invention. The unlocking operating element 113 is movably disposed on the supporting leg 30 providing a place for supporting and assembling the unlocking operating element 113, and slides with the supporting leg 30 relative to the base 20. For example, the unlocking operating element 113 slides along the front-back direction of the base 20, so that the operator may press the unlocking operating element 113 to conveniently perform the unlocking operation, which is not limited thereto.

As shown in FIGS. 2 to 5, the traction element 114 is connected to both the unlocking operating element 113 and the locking element 112, so that the unlocking operating element 113 and the locking element 112 are connected together via the traction element 114, thereby ensuring that the unlocking operating element 113 drives the locking element 112 to move synchronously when the unlocking operating element 113 is operated. The traction element 114 is bent and deformed during the sliding of the supporting leg 30 relative to the base 20, so as to avoid the movement interference of the traction element 114 on the sliding of the supporting leg 30 and ensure the smoothness of the sliding of the supporting leg 30. The holder 115 is configured to tighten bending deformation of the traction element 114, that is, a part of the traction element 114 that is bent and deformed between the unlocking operating element 113 and the locking element 112 is restrained by the holder 115, so as to ensure that the unlocking operating element 113 is linked with the locking element 112 and enables the locking element 112 to be switched from the first position as shown in FIG. 3 to the second position as shown in FIG. 4 via the traction element 114 with the assistance of the holder 115, thereby allowing the ISOFIX connector 111 to be slidably adjusted relative to the base 20. For the specific structure of the ISOFIX assembly 10, the detailed description will be described below.

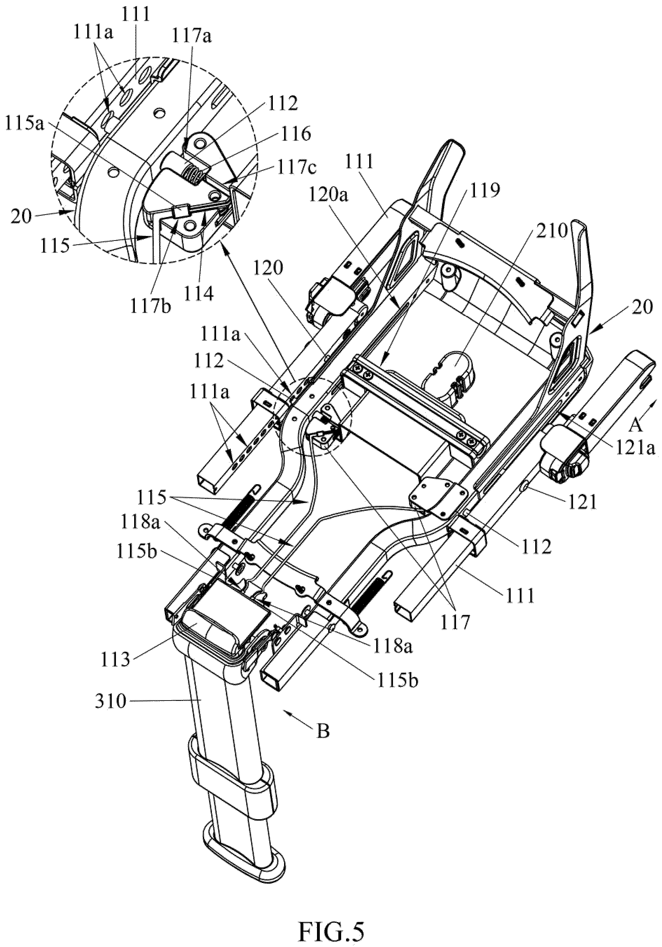

As shown in FIGS. 4 and 5, the holder 115 is a wire sleeve. A first end 115a of the wire sleeve is fixedly connected with the base 20, so that the first end 115a of the wire sleeve is restrained by the base 20 to prevent it from going away. A second end 115b of the wire sleeve is fixedly connected with the supporting leg 30, so that the second end 115b of the wire sleeve is restrained by the supporting leg 30 to prevent it from going away. The traction element 114 slidably penetrates through the wire sleeve to ensure that the traction element 114 slides smoothly in the wire sleeve, wherein an end 114a of the traction element 114 passes through the wire sleeve and is assembled and connected with the locking element 112, while the other end 114b of the traction element 114 passes through the wire sleeve and is assembled and connected with the unlocking operating element 113. Both the traction element 114 and the wire sleeve are bent and deformed synchronously during the sliding of the supporting leg 30 relative to the base 20, so as to ensure that the unlocking operating element 113 is linked with the locking element 112 and enables the locking element 112 to be switched from the first position as shown in FIG. 3 to the second position as shown in FIG. 4 via the traction element 114 with the assistance of the holder 115, thereby allowing the ISOFIX connector 111 to be slidably adjusted relative to the base 20. According to the actual situation, in other embodiments, the holder 115 may be a pivoting biasing structure that biases the traction element 114, and the pivoting biasing structure is pivotally assembled on the base 20 and biases a part of the traction element 114 between the unlocking operating element 113 and the locking element 112 from one side (for example, from a left or right side of the traction element 114). In this way, it can also ensure that the unlocking operating element 113 is linked with the locking element 112 and enables the locking element 112 to be switched from the first position as shown in FIG. 3 to the second position as shown in FIG. 4 via the traction element 114 with assistance of the pivoting biasing structure, so that the ISOFIX connector 111 can be slidably adjusted relative to the base 20. Thus, it is not limited by the drawings of the present invention.

As shown in FIGS. 4 and 5, the ISOFIX assembly 10 further includes an elastic restoring element 116 disposed between the base 20 and the locking element 112, and the elastic restoring element 116 constantly has a tendency to drive the locking element 112 to be switched to the first position as shown in FIG. 3, so that the locking element 112 is automatically switched from the second position as shown in FIG. 4 to the first position as shown in FIG. 3 under the driving of the elastic restoring element 116, thus facilitating the locking element 112 to automatically lock the ISOFIX connector 111. For example, in FIGS. 4 and 5, the locking element 112 is a pin, and the elastic restoring element 116 is a spring, however, the present invention is not limited thereto.

As shown in FIGS. 4 and 5, the ISOFIX assembly 10 further includes a first fixing seat 117 assembled on the base 20 and a second fixing seat 118 assembled on the supporting leg 30. The first fixing seat 117 is separated from the second fixing seat 118 along the telescopic direction of the ISOFIX connector 111 (i.e. parallel to the direction indicated by the arrow A) and the sliding direction of the locking element 112 (i.e. parallel to the direction indicated by the arrow B) respectively. The first fixing seat 117 is provided with an embedded avoidance cavity 117a, a first embedded fixing cavity 117b and a middle channel 117c. The embedded avoidance cavity 117a is arranged along the sliding direction of the locking element 112, so that the locking element 112 slides in the embedded avoidance cavity 117a. The first embedded fixing cavity 117b is obliquely arranged relative to the telescopic direction of the ISOFIX connector 111, so that the first end 115a of the wire sleeve is assembled in the first embedded fixing cavity 117b. For example, as shown in FIGS. 4 and 5, the elastic restoring element 116 is placed in the embedded avoidance cavity 117a, which is more convenient for the elastic restoring element 116 to drive the locking element 112 to lock with the slot structure 111a of the ISOFIX connector 111, however, it is not limited by the present invention. The middle channel 117c communicates the embedded avoidance cavity 117a with the first embedded fixing cavity 117b, so that the part of the traction element 114 passing through the first end 115a of the wire sleeve penetrates through the middle channel 117c. Meanwhile, the second fixing seat 118 is provided with a second embedded fixing cavity 118a, so that the second end 115b of the wire sleeve is assembled in the second embedded fixing cavity 118a. By means of cooperation of the first fixing seat 117 with the second fixing seat 118, the traction element 114 and the wire sleeve are smoothly bent and deformed by the supporting leg 30 during its sliding relative to the base 20. Specifically, in FIGS. 4 and 5, the second embedded fixing cavity 118a includes a straight segment 1181 arranged along the telescopic direction of the ISOFIX connector 111 and an inclined portion 1182 obliquely arranged relative to the telescopic direction of the ISOFIX connector 111 and communicated with the straight segment 181, so that both the traction element 114 and the wire sleeve are bent and deformed smoothly together. The inclined portion 1182 is located between the straight segment 1181 and the first fixing seat 117 along the telescopic direction of the ISOFIX connector 111, so as to reduce a space required when the traction element 114 and the wire sleeve are bent and deformed together, and make the structure between the first fixing seat 117, the second fixing seat 118, the traction element 114 and the holder 115 more compact.

As shown in FIGS. 3 to 5, two ISOFIX connectors 111 are arranged side by side at an interval along the sliding direction of the locking element 112. For example, as shown in FIG. 3, the ISOFIX connectors 111 are arranged side by side at a left-right interval on the base 20, however, the present invention is not limited thereto. Each of the ISOFIX connectors 111 corresponds to one locking element 112, one elastic restoring element 116, one first fixing seat 117, one traction element 114 and one wire sleeve. All of the locking elements 112, the elastic restoring elements 116 and the first fixing seats 117 are located in a space enclosed by the two ISOFIX connectors 111. Two second embedded fixing cavities of the second fixing seat are provided. The second end 115b of each of the wire sleeves is assembled into a corresponding one of the second embedded fixing cavities 118a, so that an unlocking operating element 113 can be linked with two locking elements 112 via two traction elements 114 and enable the two locking elements 112 and the corresponding slot structures 111a be unlocked synchronously, thereby allowing the two ISOFIX connectors 111 to be slidably adjusted relative to the base 20. For example, as shown in FIGS. 4 and 5, two first fixing seats 117 are symmetrically arranged with the second fixing seat 118 as a center, so as to simultaneously unlock the two ISOFIX connectors 111 by one unlocking operating element 113, and effectively ensure the smoothness of the bending deformation of the traction element 114 and the wire sleeve during the sliding of the supporting leg 30 relative to the base 20, however, the present invention is not limited thereto.

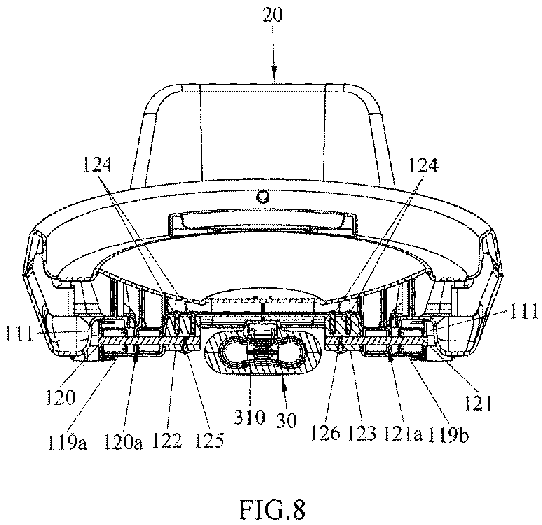

As shown in FIGS. 6 to 8, the ISOFIX assembly 10 further includes an intermediate synchronizing element 119, a first reinforcing element 120 and a second reinforcing element 121. The two ISOFIX connectors 111 are fixed together by the intermediate synchronizing element 119. A first end 119a of the intermediate synchronizing element 119 fixedly supports one of the ISOFIX connectors 111 from below, and a second end 119b of the intermediate synchronizing element 119 fixedly supports the other of the ISOFIX connectors 111 from below, so that the two ISOFIX connectors 111 telescopically slide synchronously by the intermediate synchronizing element 119. The first reinforcing element 120 penetrates through the base 20, the intermediate synchronizing element 119 and the ISOFIX connector 111 supported by the first end 119a of the intermediate synchronizing element 119 along the sliding direction of the locking element 112, and the second reinforcing element 121 penetrates through the base 20, the intermediate synchronizing element 119 and the ISOFIX connector 111 supported by the second end 119b of the intermediate synchronizing element 119 along the sliding direction of the locking element 112. The base 20 is provided with a first avoidance slip groove 120a for the first reinforcing element 120 to penetrate through and provide avoidance, and a second avoidance slip groove 121a for the second reinforcing element 121 to penetrate through and provide avoidance, so as to improve the strength and reliability of connection between the intermediate synchronizing element 119 and the two ISOFIX connectors 111 and ensure the smooth synchronous sliding of the two ISOFIX connectors 111. Specifically, in FIG. 8, the ISOFIX assembly 10 further includes a first connecting block 122 and a second connecting block 123 between the two ISOFIX connectors 111 in the sliding direction of the locking element 112. The first reinforcing element 120 also penetrates through the first connecting block 122 to strengthen the connection between the first reinforcing element 120 and the first end 119a of the intermediate synchronizing element 119. The second reinforcing element 121 also penetrates through the second connecting block 123 to strengthen the connection between the second reinforcing element 121 and the second end 119b of the intermediate synchronizing element 119. More specifically, in FIG. 8, the first connecting block 122 and the second connecting block 123 are respectively assembled and connected with the intermediate synchronizing element 119 by a first screw 124, the first connecting block 122 fixedly locks the first reinforcing element 120 by a second screw 125, and the second connecting block 123 fixedly locks the second reinforcing element 121 by a third screw 126, thus ensuring the fixed connection between the first reinforcing element 120 and the second reinforcing element 121 and the intermediate synchronizing element 119, which is not limited thereto. For example, as shown in FIG. 8, the part of the intermediate synchronizing element 119 between the first end 119a and the second end 119b has a U-shaped structure, and the first connecting block 122 and the second connecting block 123 are located in the space of the U-shaped structure, so that the first reinforcing element 120 penetrates through the first connecting block 122 and the second reinforcing element 121 penetrates through the second connecting block 123, however, the present invention is not limited thereto. The part of the intermediate synchronizing element 119 between the first end 119a and the second end 119b is in a U-shaped structure, so as to facilitate the stand 310 of the supporting leg 30 to be folded in the U-shaped structure when it is in the folded position as shown in FIG. 6, and avoid the movement interference between the stand 310 in the folded position as shown in FIG. 6 and the intermediate synchronizing element 119 when the stand 310 slides backwards. It can be understood that the first connecting block 122 and the second connecting block 123 are disposed at left and right sides of the stand 310 in the folded position as shown in FIG. 6 in the U-shaped structure, respectively. In addition, the first reinforcing element 120 and the second reinforcing element 121 may be deleted as required, and correspondingly, the base 20 is no longer provided with the first avoidance slip groove 120a for the first reinforcing element 120 to penetrate through and provide avoidance, and the second avoidance slip groove 121a for the second reinforcing element 121 to penetrate through and provide avoidance.

It should be noted that the structure including the traction element 114 and the holder 115 can be summarized as a self-adaptive link assembly 10a (see FIG. 4). The link assembly 10a is connected to both the locking element 112 and the unlocking operating element 113, and is adaptively adjusted during the sliding of the supporting leg 30 relative to the base 20, so that the unlocking operating element 113 is linked with and enable the locking element 112 to be switched between the first position as shown in FIG. 3 and the second position as shown in FIG. 4 via the intermediate linkage portion 10a, however, it is not limited by the above-mentioned examples. The link assembly 10a, the locking element 112 and the unlocking operating element 113 can also be collectively referred to as "telescopic adjusting mechanism".

The self-adaptive link assembly 10a of the present invention is connected to both the unlocking operating element 113 and the locking element 112, and makes a self-adaptive adjustment during the movement of the supporting leg 30 relative to the base 20, so that the unlocking operating element 113 is linked with and enables the locking element 112 to be switched between the first position as shown in FIG. 3 and the second position as shown in FIG. 4 via the intermediate linkage portion 10a. In this way, the ISOFIX assembly 10 of the present invention has simple structure and convenient operation, and the supporting leg 30 can slide without affecting the telescopic adjustment thereof. In addition, the child safety seat 1 of the present invention includes the ISOFIX assembly 10, so that the child safety seat 1 of the present invention has simple structure and convenient operation, and the supporting leg 30 can move (for example, slide) without affecting the telescopic adjustment thereof.

It should be noted that, the supporting leg 30 described above are disposed on the base 20 in a sliding way, however, the supporting leg 30 may also be pivotally disposed on the base 20 as required, so that the supporting leg 30 may be pivoted around a pivot centerline relative to the base 20, which is not limited by the above examples. In addition, in the drawings, the direction indicated by the arrow A is a direction of the child safety seat 1 of the present invention from front to back, and the direction indicated by the arrow B is a direction of the child safety seat 1 of the present invention from left to right.

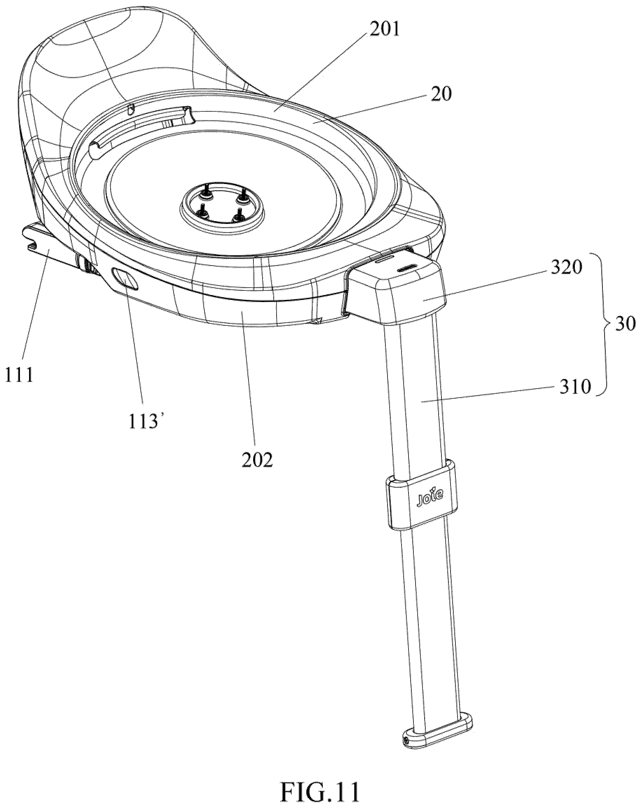

In another embodiment of the present invention, the child safety seat 1 includes a base 20 and a supporting leg 30 movably assembled on the base 20, for example, the supporting leg 30 is slidably assembled on the base 20. As shown in FIG. 11, the base 20 includes a housing including an upper cover 201 and a lower cover 202 assembled together.

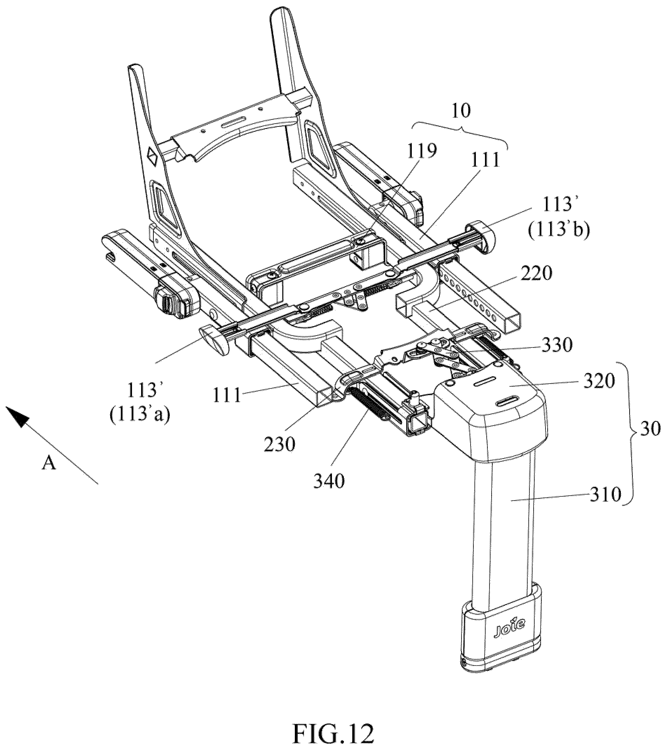

FIGS. 12 to 14 show perspective structural schematic view of the ISOFIX assembly inside the child safety seat 1 shown in FIG. 11 after the housing of the base is hidden. The child safety seat 1 also includes an ISOFIX assembly, wherein the ISOFIX assembly 10 includes two ISOFIX connectors 111 and an intermediate synchronizing element 119. The intermediate synchronizing element 119 enables the two ISOFIX connectors 111 to move synchronously and telescopically.

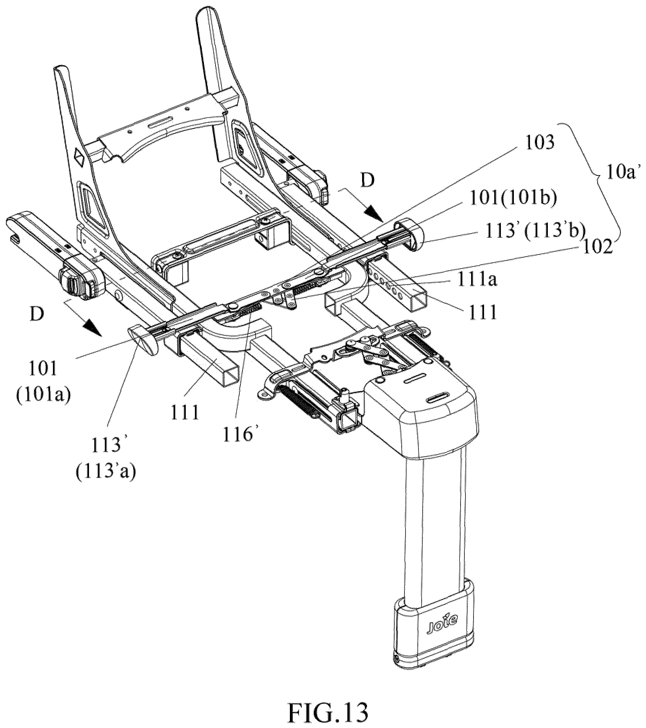

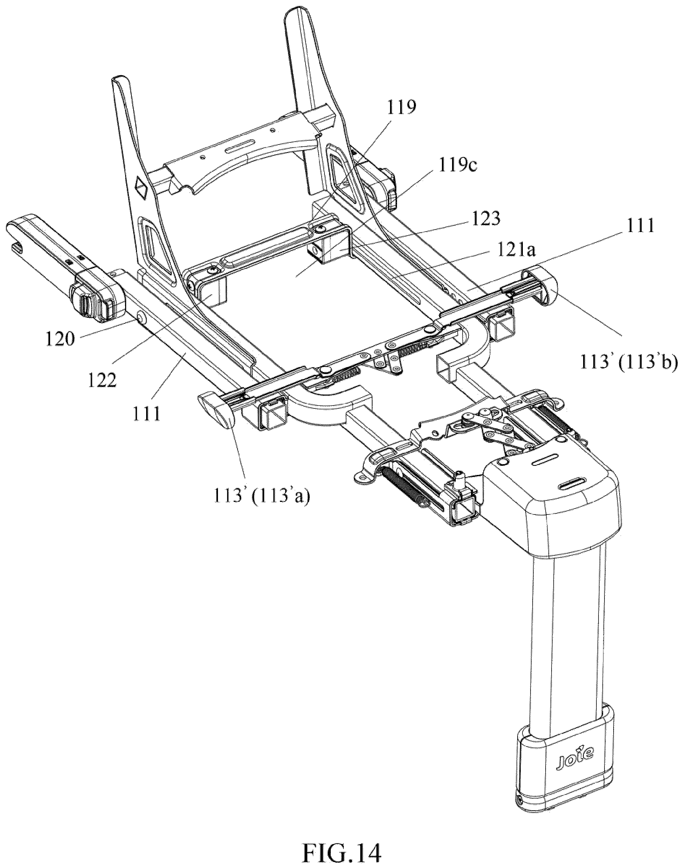

In an example, two ISOFIX connectors 111 are symmetrically arranged in a transverse direction, and are telescopically and slidably assembled on both sides of the base 20, for example, may extend from (i.e., slide out) or be retracted into (i.e., slide in) a rear end of the base along the front-back direction of the base 20, so as to adapt to be connected and fixed with vehicle seats of different specifications. As shown in FIG. 12, the ISOFIX connectors 111 are completely retracted into the base; as shown in FIG. 13, the ISOFIX connectors 111 are in the middle of the stroke of sliding outward from the base; and as shown in FIG. 14, the ISOFIX connectors 111 completely extend out of the base.

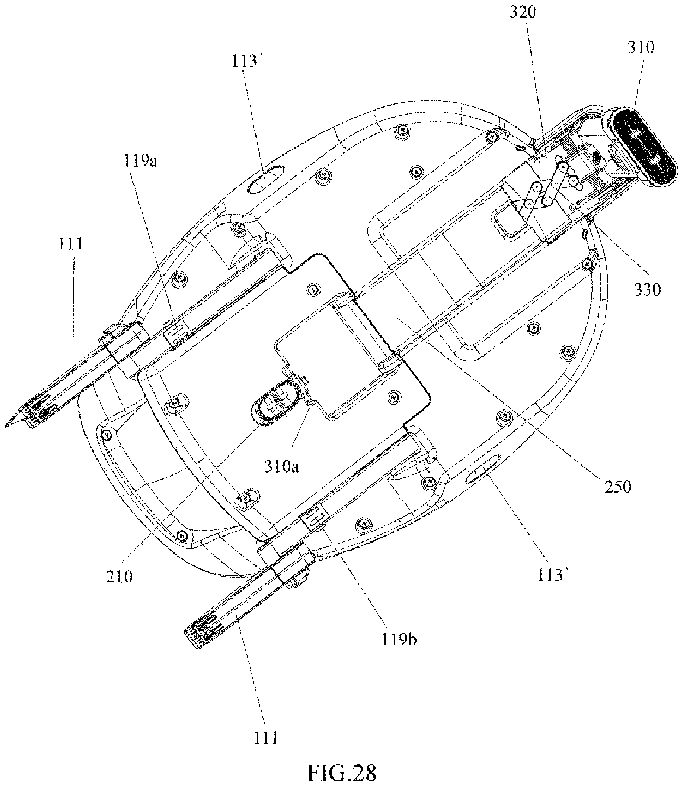

With further reference to FIGS. 12 to 14, the intermediate synchronizing element 119 is transversely fixed between the two ISOFIX connectors 111, so that the two ISOFIX connectors 111 can move synchronously, that is, extend from or retract into the base synchronously. The intermediate synchronizing element 119 has a first end 119a, a second end 119b, and an avoidance space 119c between the first end 119a and the second end 119b, wherein the first end 119a and the second end 119b are located at two ISOFIX connectors 111 respectively. The avoidance space 119c of the intermediate synchronizing element 119 is configured to accommodate the supporting leg 30 in the folded state, so as to prevent the synchronous movement of ISOFIX from interfering with the folding of the supporting leg 30. For example, the avoidance space 119c is formed by arching a middle part of the intermediate synchronizing element 119 upwards, so as to avoid the accommodating recess 250 concavely provided on the lower cover 202 of the base 20 to accommodate the folded supporting leg 30 (as shown in FIG. 28). For example, the intermediate synchronizing element 119 is in an inverted U-shape or a "Ω" shape, so that its middle part forms an avoidance space 119c. The intermediate synchronizing element 119 may have other shapes that can accommodate the folded supporting leg 30, such as arch, trapezoid, etc.

The ISOFIX assembly of the present invention also includes a telescopic adjusting mechanism 100 to adjust the front-back telescopic movement of the ISOFIX connector 111 relative to the base 20.

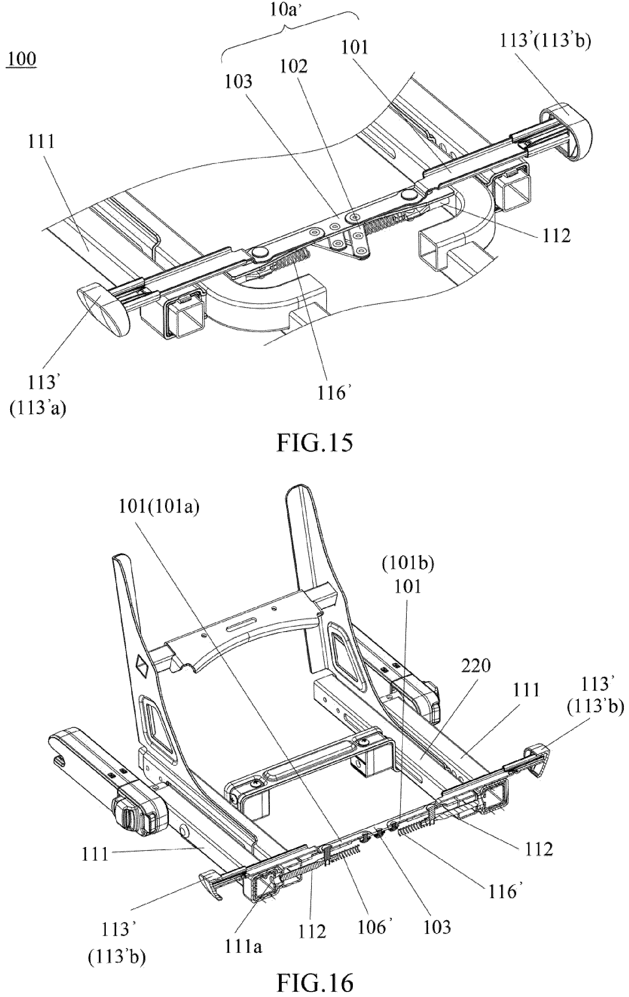

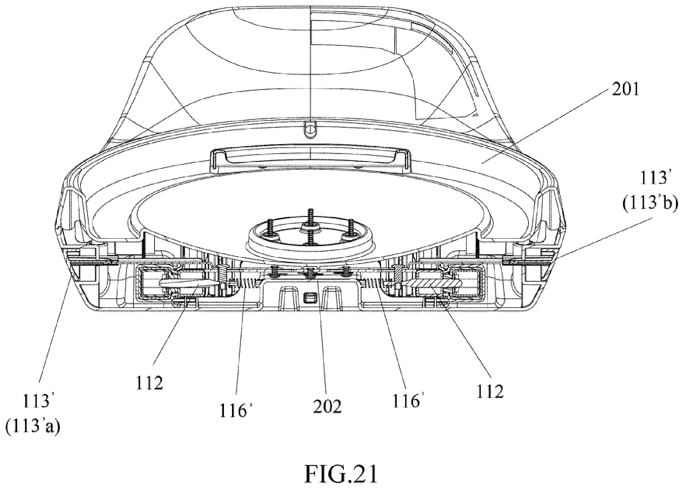

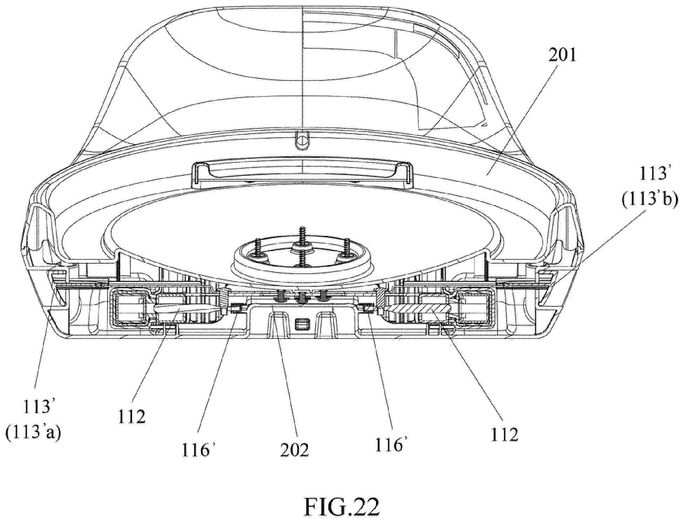

FIGS. 15 to 17 show a partial enlarged view and sectional views of the telescopic mechanism 100 respectively. The telescopic mechanism 100 includes a locking element 112, an unlocking operating element 113' and a link assembly 10a'. As shown in FIG. 15, the locking element 112 is disposed on the link assembly 10a', and is fixed to the link assembly 10a'by fastening devices such as rivets (such as T-shaped rivets), bolts, screws, clips or the like, for example, fixed to the connecting element 101 of the link assembly 10a' (which will be described in detail below), and is capable of moving between the first position (i.e., a locking position of the locking element) and the second position (i.e. an unlocking position of the locking element) relative to the base 20. The link assembly 10a' is installed on the base 20 and connected between the locking element 112 and the unlocking operating element 113'. In an embodiment, the link assembly 10a' is disposed above a base bracket 220 of the base 20 to avoid the supporting leg in the folded state, that is, the supporting leg in the folded state may be placed in the base bracket 220 under the link assembly 10a' and will not protrude from the bottom of the base 20. The locking element 112 is in the second position (as shown in FIG. 22) when the unlocking operating element 113' is driven, and the two ISOFIX connectors 111 are unlocked and slide relative to the base 20. The locking element 112 is in the first position (as shown in FIG. 21) when the unlocking operating element 113' is released, and the locking element 112 cooperates with the locking structure on the ISOFIX connector 111, so that the two ISOFIX connectors 111 are locked relative to the base 20. For example, the locking element 112 is a pin, while the locking structure of the ISOFIX connector 111 is formed by a plurality of slot structures 111a arranged at intervals along the telescopic direction thereof, however, it is not limited thereto. The locking element 112 is inserted into different slot structures 111a, so that the ISOFIX connector 111 may be located at different positions, that is, extend from the base 20 by different lengths.

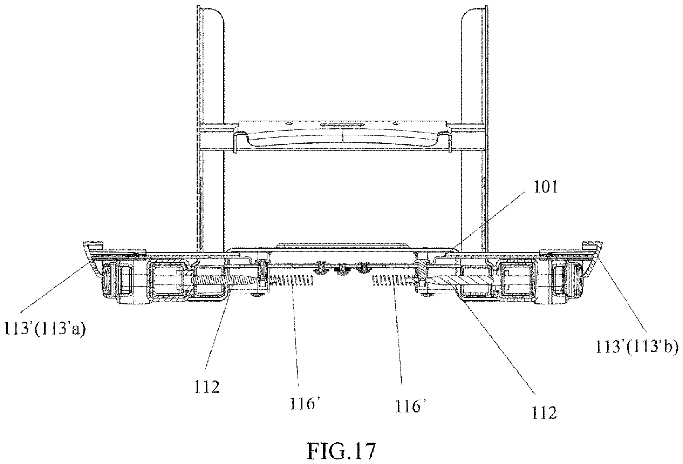

In addition, as shown in FIG. 17, the telescopic adjusting mechanism 100 further includes an elastic restoring element 116' disposed between the base 20 and the locking element 112, and the elastic restoring element 116'constantly has a tendency to drive the locking element 112 to be switched to the first position. For example, the elastic restoring element 116' may be a return spring. With further reference to FIGS. 21 and 22, when the telescopic adjusting mechanism 100 is assembled in the base 20, an end of the elastic restoring element 116' abuts against the base 20, for example, a side surface of the accommodating recess 250 (as shown in FIG. 28) recessed in the bottom of the lower cover 202 of the base 20, while the other end of the elastic restoring element 116' abuts against the locking element 112, for example, sleeved and abuts against an end of the locking element 112.

In an example of the present invention, the unlocking operating element 113' includes a first unlocking operating element 113'a and a second unlocking operating element 113'b symmetrically disposed on both sides of the base 20. For example, the first unlocking operating element 113'a and the second unlocking operating element 113'b are both pressing elements. When the unlocking operating element 113', such as at least one of the first unlocking operating element 113'a and the second unlocking operating element 113'b, is driven (e.g., pressed), the unlocking operating element 113' pushes the link assembly 10a', and then brings the locking element 112 to move from the first position (as shown in FIG. 21) to the second position (as shown in FIG. 22), so as to release the locking state of the ISOFIX connectors 111, and allow the positions of the two ISOFIX connectors 111 relative to the base 20 to be adjusted. When the unlocking operating element 113' is released, the elastic restoring element 116' returns to the original position, the locking element 112 is pushed into the locking structure (i.e., the slot structure 111a) on the ISOFIX connector 111, thereby returning the locking element 112 to the first position, and further locking the ISOFIX connector 111 with respect to the base 20.

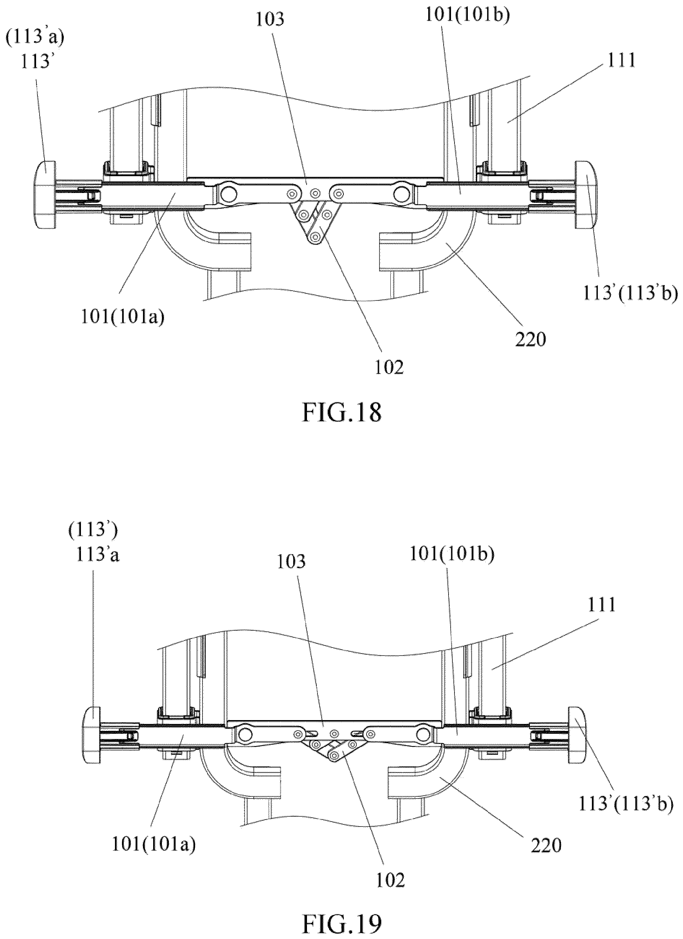

With further reference to FIGS. 18 and 19, the link assembly 10a' includes a connecting element 101, a linkage portion 102 and a beam 103. The beam 103 is erected on the base bracket 220 of the base 20 and located between the two ISOFIX connectors 111. The connecting element 101 is slidably disposed on the beam 103 along a length direction of the beam 103 (which is the same as the sliding direction of the locking element 112), and includes a first connecting element 101a and a second connecting element 101b. An end of the first connecting element 101a is connected with the first unlocking operating element 113'a, and an end of the second connecting element 101b is connected with the second unlocking operating element 113'b. The linkage portion 102 is movably disposed on the beam 103, and is hinged with the other end of the first connecting element 101a and the other end of the second connecting element 101b, so that the linkage portion 102 is switched between a retracted state and an expanded state by driving and releasing at least one of the first and second unlocking operating elements 113'a and 113'b. For example, the linkage portion 102 is a four-bar linkage, for example, composed of a plurality of iron sheets.

In this embodiment, the beam 103 is symmetrically provided with sliding grooves transversely extending along a longitudinal direction, and the other end of the first connecting element 101a and the other end of the second connecting element 101b move along the corresponding sliding grooves respectively. Specifically, when at least one of the first and second unlocking operating elements 113'a and 113'b is driven, opposite ends of the first and second connecting elements 101a and 101b are pushed to move relatively along their corresponding sliding grooves, so that the linkage portion 102 is in the retracted state as shown in FIG. 18; and when the operated unlocking operating element is released, the first connecting element 101a and the second connecting element 101b move in opposite directions to each other under the action of the elastic restoring element 116', so that the linkage portion 102 is restored to the expanded state as shown in FIG. 19.

In an embodiment, the linkage portion 102 is disposed in the horizontal direction (for example, the entire linkage portion 100 extends in the horizontal direction), so that the linkage portion 100 and the telescopic adjusting mechanism have stable and compact structures, saving more space and facilitating the synchronous position adjustment of two ISOFIX connectors 111 in a limited space.

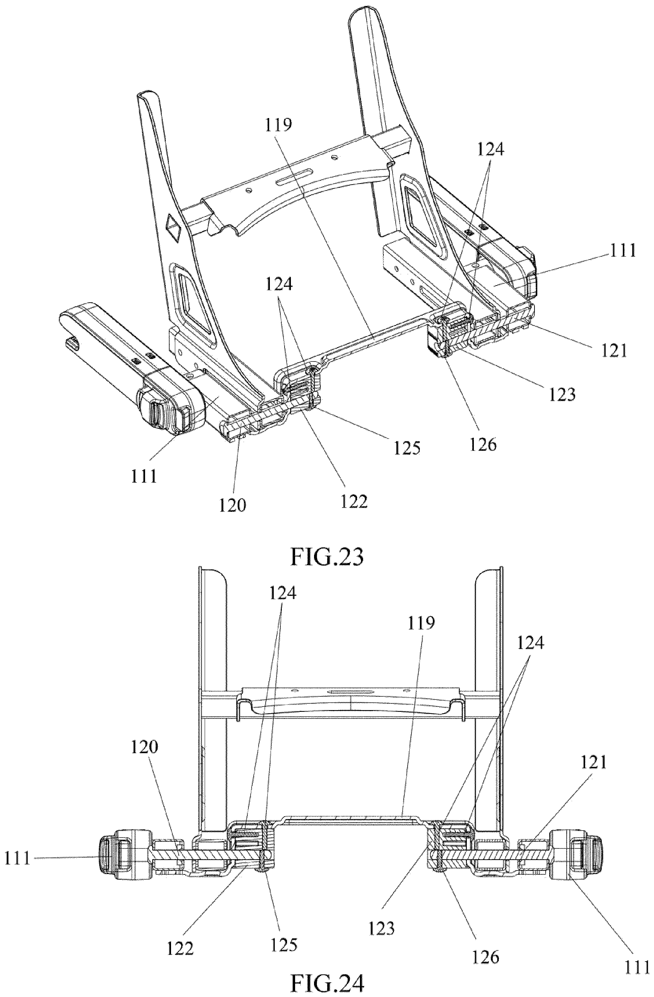

FIGS. 23 and 24 show cross-sectional views taken along a longitudinal center of the intermediate synchronizing element 119. Similar to the embodiment shown in FIGS. 6 to 8, the ISOFIX assembly 10 further includes a first reinforcing element 120 and a second reinforcing element 121. The first end 119a of the intermediate synchronizing element 119 supports and connects one of the two ISOFIX connectors 111 from below, and the second end 119b of the intermediate synchronizing element 119 supports and connects the other of the two ISOFIX connectors 111 from below. The first reinforcing element 120 penetrates through the base bracket 220, the intermediate synchronizing element 119 and the ISOFIX connector 111 supported by the first end 119a of the intermediate synchronizing element 119 along the sliding direction of the locking element 112. Similarly, the second reinforcing element 121 penetrates through the base bracket 220, the intermediate synchronizing element 119 and the ISOFIX connector 111 supported by the second end 119b of the intermediate synchronizing element 119 along the sliding direction of the locking element 112. Accordingly, the base bracket 220 of the base 20 is provided with a first avoidance slip groove 120a for the first reinforcing element 120 to penetrate through and provide avoidance, and a second avoidance slip groove 121a for the second reinforcing element 121 to penetrate through and provide avoidance. With the above structure, both the two ISOFIX connectors 111 can synchronously extend and retract with respect to the base 20 along the avoidance slip groove on the base bracket 220.

In addition, in order to further enhance the connection reliability between the intermediate synchronizing element 119 and the ISOFIX connectors 111, and further stabilize the synchronous extending and retracting of the two ISOFIX connectors, a first connecting block 122 and a second connecting block 123 may be further disposed between the two ISOFIX connectors 111, and penetrate through the first connecting block 122 and the second connecting block 123 respectively. For example, the first connecting block 122 is fixedly connected with the first reinforcing element 120 and the intermediate synchronizing element 119 inserted therein by a plurality of fastening devices (such as screws 124, 125, 126), and the second connecting block 123 is also fixedly connected with the second reinforcing element 121 and the intermediate synchronizing element 119 inserted therein by a plurality of fastening devices (such as screws 124, 125, 126), so as to realize a more stable connection between the ISOFIX connectors 111 and the intermediate synchronizing element 119, thereby further ensuring smooth synchronous extending and retracting.

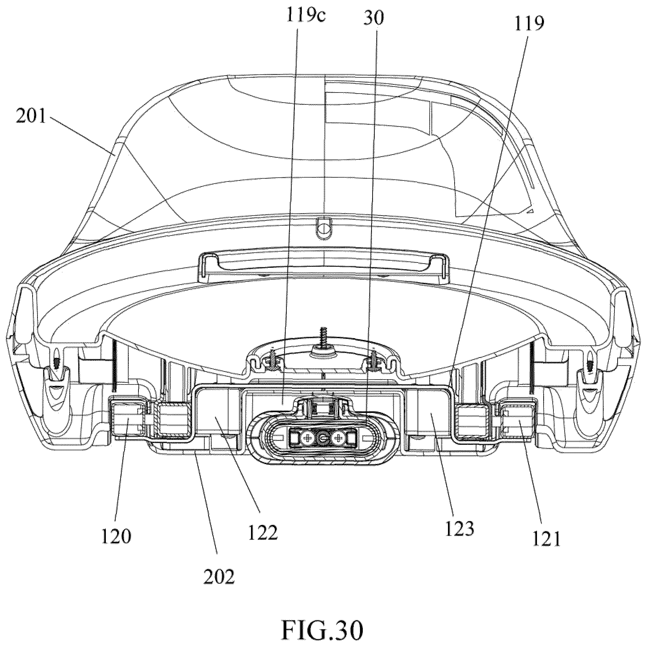

Furthermore, as shown in FIGS. 24 and 30, the first connecting block 122 and the second connecting block 123 are located below the middle part of the intermediate synchronizing element 119 respectively, and the avoidance space 119c for avoiding the accommodating recess of the lower cover 202 of the base and the supporting leg 30 is located between the first connecting block 122 and the second connecting block 123.

The ISOFIX assembly of the present invention has simple and compact structure, and convenient operation; and by providing the intermediate synchronizing element 119 having the avoidance space, the ISOFIX connectors 111 located at both sides of the base can move synchronously, and this synchronous movement will be affected by the folding action of the supporting leg, and provide a storage space for the supporting leg.

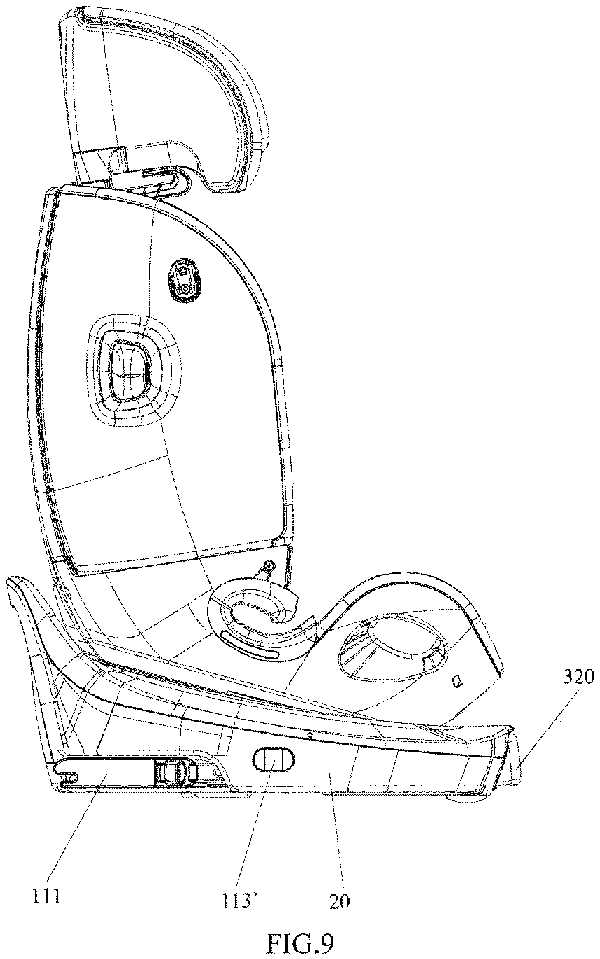

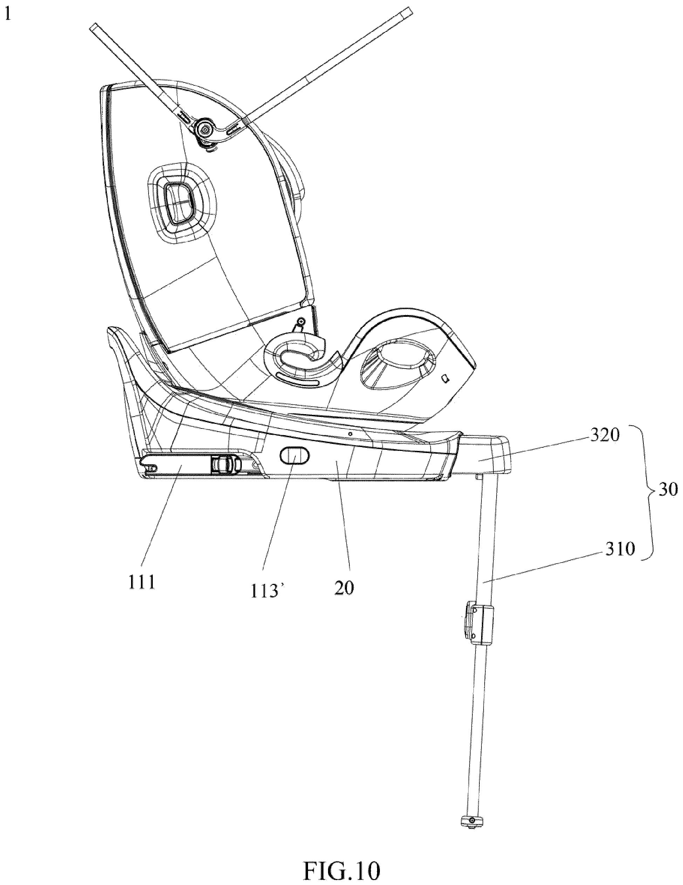

The embodiment of the present invention also provides a child safety seat, wherein the child safety seat 1 has two use states: a mode of using the supporting leg, as shown in FIG. 9; and a mode without using the supporting leg, as shown in FIG. 10.

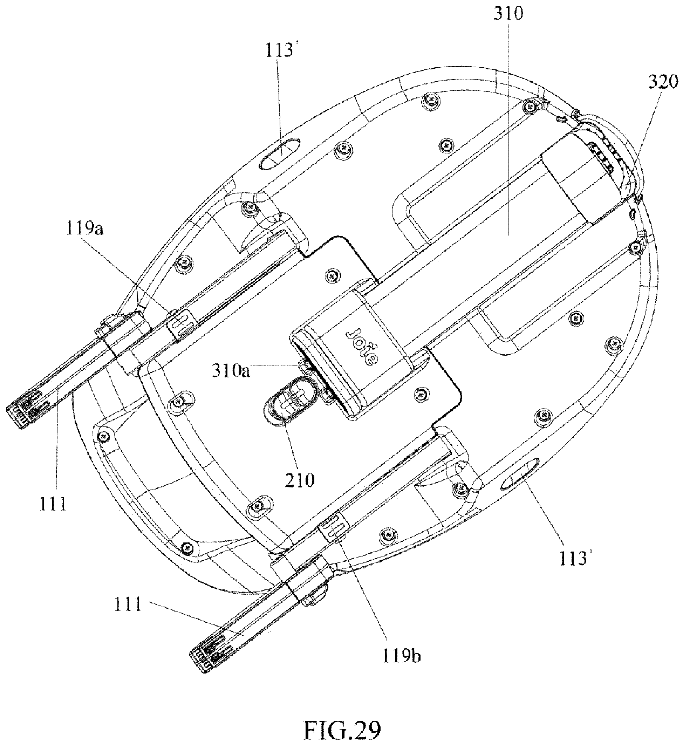

Specifically, the supporting leg 30 of the child safety seat 1 may slide (e.g., in the front-back direction of the base 20) and be pivoted relative to the base 20. The supporting leg 30 includes a stand 310 and a sliding seat 320. The sliding seat 320 is slidably disposed on the base 20 in the front-back direction, and the stand 310 is pivoted relative to the sliding seat 320 to have an unfolded position (as shown in FIG. 28) and a folded position (as shown in FIG. 29). Specifically, the stand 310 is switched between the unfolded position and the folded position by the movement of the sliding seat 320 relative to the base 20 in the front-back direction.

The base 20 of the child safety seat 1 has an accommodating space to accommodate the stand 310 in the folded state. Specifically, the stand 310 is folded below the base 20 when it is in the folded position to be accommodated in the accommodating space, that is, it is also accommodated in a space defined by the avoidance space 119c of the intermediate synchronizing element 119, as shown in FIG. 30. In an embodiment, the accommodating space is an accommodating recess 250 recessed from the underside of the base 20. For example, a section of the accommodating space in a direction perpendicular to the base 20 is in an inverted U-shape, preferably in a "Ω" shape, which corresponds to a shape of the avoidance space 119c of the intermediate synchronizing element 119. The accommodating space may also have other shapes that can accommodate the folded supporting leg, such as arch, trapezoid or the like. In an example, the stand 310 slides along the front-back direction of the base 20 in the accommodating space when it is in the folded state.

The child safety seat 1 further includes a supporting leg bracket 350 for installing the supporting leg 30 (specifically, the sliding seat 320 of the supporting leg) on the base 20, and the supporting leg bracket 350 moves with the sliding of the sliding seat 320 in the front-back direction.

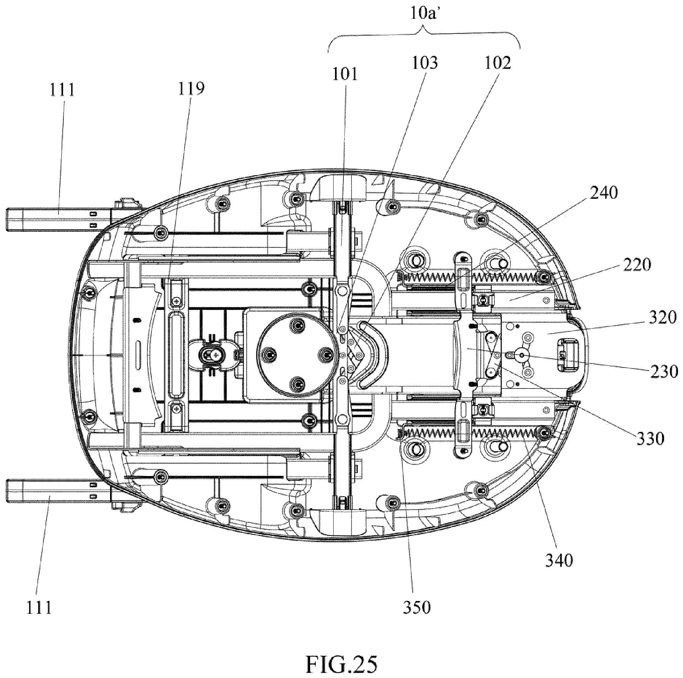

As shown in FIGS. 25 to 27, the child safety seat 1 further includes a fixing bracket 230, a stroke enlarging structure 330 and a tension spring 340. The fixing bracket 230 is erected on the base 20, for example, in the lower cover 202 of the base 20 near the sliding seat 320. The stroke enlarging structure 330 has an X-shaped cross-folding mechanism (for example, an X-shaped four-bar linkage mechanism), wherein an end of the X-shaped cross-folding mechanism is installed on the fixing bracket 230, and the other end thereof is installed on the sliding seat 320. The stroke enlarging structure 330 is configured to enlarge the sliding stroke of the supporting leg 30 relative to the base 20 in the front-back direction, especially further increase a stroke displacement generated by rotation of the driving steel wire 360 inside the supporting leg 30 when the supporting leg 30 is folded, and even double the stroke displacement. The tension spring 340 is disposed between the base 20 and the sliding seat 320, and constantly has a tendency to drive the sliding seat 320 to be pulled outward.

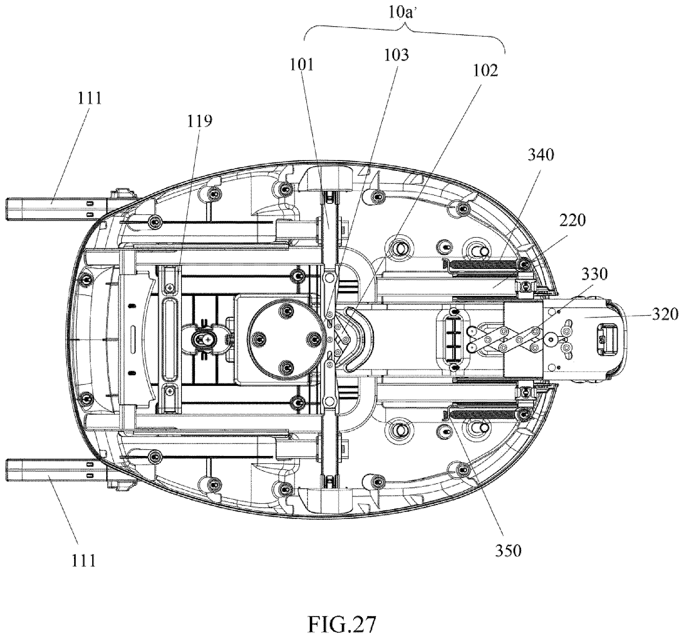

FIG. 25 shows the tension spring 340 in a stretched state, and FIG. 27 shows the tension spring 340 in a relaxed state. As shown, an end of the tension spring 340 is connected with the supporting leg bracket 350, and the other end thereof is connected with the base 20. For example, in this embodiment, an end of the tension spring 340 is fixed at a notch at an end of the supporting leg bracket 350, and the other end thereof is hooked on a fixing post provided at an edge of the base 20. However, the connection of the tension spring with the base and the supporting leg bracket is not limited thereto, and other connection modes can also be used as required.

As shown in FIGS. 28 and 29, the bottom of the base 20 is provided with a clamping part 210 located right behind the stand 310, and a lower end of the stand 310 is provided with a matching part 310a matched with the clamping part 210. The clamping part 210 is clamped with the matching part 310a when the sliding seat 320 drives the stand 310 in the folded position to slide backwards by a predetermined distance, thereby locking the supporting leg 30 to the folded position. In the folded position, the sliding seat 320 of the supporting leg 30 retracts into the base 20 (as shown in FIG. 29), and the supporting leg 30 is received in the accommodating space (for example, the accommodating recess 250) below the base 20 without protruding from the lower surface of the base 20 (as shown in FIG. 30), so that the supporting leg 30 can be placed on the vehicle seat stably, thereby preventing the child safety seat from shaking during the vehicle traveling due to the unevenness on the bottom of the base.

With the cooperation of the stroke enlarging structure 330 and the tension spring 340 in this embodiment, the sliding seat 32 retracts back to the base 20 when the supporting leg 30 is locked (for example, the clamping part 210 is clamped with the matching part 310a), and the stand 310 is folded in the accommodating recess under the base 20, and at this time, the tension spring 340 is stretched. The stand 310 is pivoted downwards when the supporting leg 30 is unlocked (for example, the clamping part 210 is separated from the matching part 310a), and the sliding seat 320 extends from the base 20 under the restoring effect of the tension spring 340. Therefore, with the above structure, the supporting leg 30 extends outward while being opened, and is retracted inward while being folded.

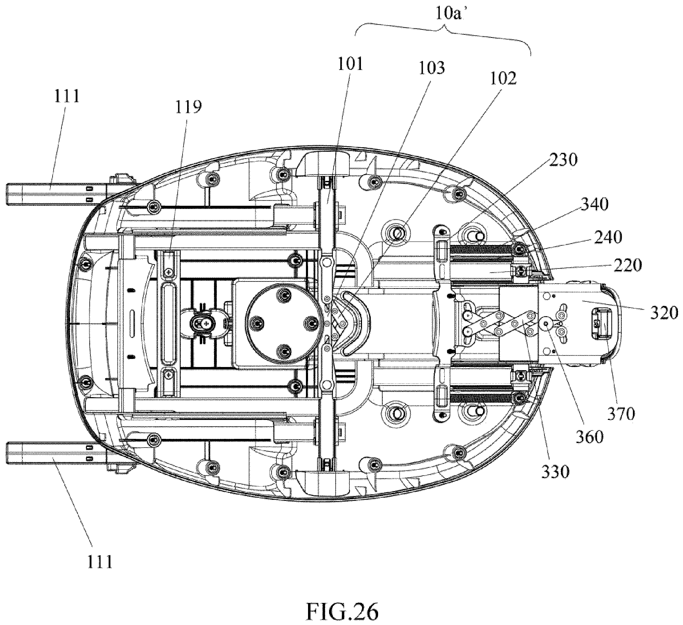

The stand 310 of the supporting leg 30 has an adjustable length (as shown in FIG. 11) as required, so as to adapt to a height between the seat and the vehicle floor in different vehicles. In addition, the supporting leg 30 may also be provided with a touchdown indicator 370 (as shown in FIG. 26), which is linked with an indicator driving rod at the bottom of the stand 310.

The invention relates, inter alia, to the following aspects:
1. A child safety seat (1) comprising a base (20) and a supporting leg (30) movably assembled on the base (20), the supporting leg (30) comprising a stand (310) and a sliding seat (320) slidably disposed on the base (20), and the stand (310) being pivotally connected relative to the sliding seat and having an unfolded position and a folded position,
   the base (20) has an accommodating space for accommodating the stand (310) in the folded position.
2. The child safety seat (1) according to aspect 1, wherein the supporting leg (30) is configured to slide along a front-back direction of the base (20).
3. The child safety seat (1) according to aspect 2, wherein the stand (310) is configured to slide along the front-back direction of the base (20) in the accommodating space when it is in the folded position.
4. The child safety seat (1) according to any of the previous aspects, wherein the accommodating space is an accommodating recess (250) recessed from an underside of the base (20).
5. The child safety seat (1) according to any of the previous aspects, wherein a cross section of the accommodating space in a direction perpendicular to the base (20) is in an inverted U-shape.
6. The child safety seat (1) according to any of the previous aspects, wherein the stand (310) is switched between the unfolded position and the folded position by moving the sliding seat (320) relative to the base (20) forwards and backwards.
7. The child safety seat (1) according to any of the previous aspects, further comprising:
   a fixing bracket (230) erected on the base (20);
   a stroke enlarging structure (330) having an X-shaped cross-folding mechanism, an end of which is installed on the fixing bracket, and the other end of which is installed on the sliding seat (320); and
   a tension spring (340) disposed between the base (20) and the sliding seat (320), and having a tendency to pull the sliding seat (320) outwards.
8. The child safety seat (1) according to any of the previous aspects, wherein a bottom of the base (20) is provided with a clamping part (210), a lower end of the stand (310) is provided with a matching part (310a) matched with the clamping part (210), and the clamping part (210) is clamped with the matching part (310a) when the sliding seat (320) drives the stand (310) in the folded position to slide backwards by a predetermined distance.
9. The child safety seat (1) according to any of the previous aspects, wherein the sliding seat (320) of the supporting leg (30) is located at a middle portion of a front end of the base (20), and the accommodating space extends from the middle portion of the front end of the base (20) to accommodate the stand (310) in the folded position.
10. The child safety seat (1) according to any one of aspects 1 to 9, wherein the child safety seat (1) further comprises an ISOFIX assembly comprising:
   two ISOFIX connectors (111) slidably assembled on both sides of the base (20); and
   an intermediate synchronizing element (119) fixed between the two ISOFIX connectors (111) to enable the two ISOFIX connectors (111) move synchronously, and having an avoidance space (119c) for accommodating the supporting leg (30) in a folded state.
11. The child safety seat (1) according to aspect 10, wherein the avoidance space (119c) is formed by arching a middle part of the intermediate synchronizing element (119) upwards.
12. The child safety seat (1) according to any of aspect 10 or aspect 11, wherein the intermediate synchronizing element (119) is in an inverted U-shape, and forms the avoidance space at its middle part.
13. The child safety seat (1) according to any of aspects 10 to 12, further comprising:
   a telescopic adjusting mechanism (100) comprising:
   a link assembly (10a, 10a') installed on the base (20);
   a locking element (112) disposed on the link assembly (10a, 10a') and capable of moving relative to the base (20) between a first position and a second position, the two ISOFIX connectors (111) are locked relative to the base (20) when the locking element (112) is in the first position, and the two ISOFIX connectors (111) is slidable relative to the base (20) when the locking element (112) is in the second position;
   an unlocking operating element (113, 113'), the link assembly (10a, 10a') being connected between the locking element (112) and the unlocking operating element (113, 113'), and the locking element (112) being switched between the first position and the second position via the link assembly (10a, 10a') when the unlocking operating element (113, 113') is operated.
14. The child safety seat (1) according to aspect 13, wherein a sliding direction of the two ISOFIX connectors (111) and a moving direction of the locking element (112) are perpendicular to each other.
15. The child safety seat (1) according to any of aspect 13 or aspect 14, wherein the telescopic adjusting mechanism (100) further comprises an elastic restoring element (116, 116') disposed between the base (20) and the locking element (112), and having a tendency to drive the locking element (112) to be switched to the first position.
16. The child safety seat (1) according to aspect 15, wherein the unlocking operating element (113') comprises a first unlocking operating element (113'a) and a second unlocking operating element (113'b) symmetrically disposed on both sides of the base (20),
   the locking element (112) moves from the first position to the second position when the unlocking operating element (113') is driven, so as to allow positions of the two ISOFIX connectors (111) relative to the base (20) to be adjusted, and
   the locking element (112) returns to the first position under an action of the elastic restoring element (116') when the unlocking operating element (113') is released.
17. The child safety seat (1) according to aspect 16, wherein the link assembly (10a') comprises a connecting element (101), a linkage portion (102) and a beam (103),
   the beam (103) is erected on the base (20) and located between the two ISOFIX connectors (111);
   the connecting element (101) is slidably disposed on the beam (103), and comprises a first connecting element (101a) having an end connected with the first unlocking operating element (113'a) and a second connecting element (101b) having an end connected with the second unlocking operating element (113'b); and
   the linkage portion (102) is movably disposed on the beam (103), and hinged with the other end of the first connecting element (101a) and the other end of the second connecting element (101b), so that the linkage portion (102) is switched between a retracted state and an expanded state by driving and releasing at least one of the first unlocking operating element (113'a) and the second unlocking operating element (113'b).
18. The child safety seat (1) according to aspect 17, wherein the linkage portion (102) is a four-bar linkage mechanism.
19. The child safety seat (1) according to any of aspect 17 or aspect 18, wherein the beam (103) is symmetrically provided with sliding grooves along a longitudinal direction each of which is extended transversely, and the other end of the first connecting element (101a) and the other end of the second connecting element (101b) move along corresponding sliding grooves, respectively.
20. The child safety seat (1) according to any of aspect 17, 18 or 19, wherein the linkage portion (102) is disposed in a horizontal direction.
21. The child safety seat (1) according to any of aspects 13 to 20, wherein the unlocking operating element (113) is movably disposed on the supporting leg (30), and the link assembly (10a) adaptively adjusts during a movement of the supporting leg (30) relative to the base (20), so that the unlocking operating element (113) is linked with the locking element (112) and enables the locking element (112) to be switched between the first position and the second position via the link assembly (10a).
22. The child safety seat (1) according to aspect 21, wherein the link assembly comprises:
   a traction element (114) connected between the unlocking operating element (113) and the locking element (112), and deformed during the movement of the supporting leg (30) relative to the base (20); and
   a holder (115) configured to tighten deformation of the traction element (114), so that the unlocking operating element (113) is linked with the locking element (112) and enables the locking element (112) to be switched from the first position to the second position via the traction element (114) with assistance of the holder (115).
23. The child safety seat (1) according to aspect 22, wherein the holder (115) is a wire sleeve having a first end (115a) fixedly connected with the base (20) and a second end (115b) fixedly connected with the supporting leg (30), the traction element (114) slidably penetrating through the wire sleeve, an end of the traction element (114) extending out of the wire sleeve and assembled with the locking element (112), and the other end of the traction element (114) extending out of the wire sleeve and assembled with the unlocking operating element (113), and both of the traction element (114) and the wire sleeve are synchronously deformed during the movement of the supporting leg (30) relative to the base (20).
24. The child safety seat (1) according to aspect 22, wherein the holder (115) is a pivoting biasing structure that biases the traction element (114), and the pivoting biasing structure is pivotally assembled on the base (20) and biases a part of the traction element (114) between the unlocking operating element (113) and the locking element (112) from a single side.
25. The child safety seat (1) according to aspect 23, wherein the ISOFIX assembly (10) further comprises a first fixing seat (117) assembled on the base (20) and a second fixing seat (118) assembled on the supporting leg (30), the first fixing seat (117) is separated from the second fixing seat (118) along a telescopic direction of the ISOFIX connector (111) and a sliding direction of the locking element (112) respectively, the first fixing seat (117) is provided with an embedded avoidance cavity (117a) arranged along the sliding direction of the locking element (112), a first embedded fixing cavity (117b) obliquely arranged relative to the telescopic direction of the ISOFIX connector (111), and a middle channel (117c) communicating the embedded avoidance cavity (117a) and the first embedded fixing cavity (117b), the second fixing seat (118) is provided with a second embedded fixing cavity (118a), the elastic restoring element (116) is placed in the embedded avoidance cavity (117a), a first end (115a) of the wire sleeve is assembled in the first embedded fixing cavity (117b), and a second end (115b) of the wire sleeve is assembled in the second embedded fixing cavity (118a), and a part of the traction element (114) extending out of the first end (115a) of the wire sleeve penetrating through the middle channel (117c).
26. The child safety seat (1) according to aspect 25, wherein the second embedded fixing cavity (118a) comprises a straight segment (1181) arranged along the telescopic direction of the ISOFIX connector (111) and an inclined portion (1182) obliquely arranged relative to the telescopic direction of the ISOFIX connector (111) and communicated with the straight segment (1181), the inclined portion (1182) is located between the straight segment (1181) and the first fixing seat (117) along the telescopic direction of the ISOFIX connector (111).
27. The child safety seat (1) according to any of aspect 25 or aspect 26, wherein the two ISOFIX connectors (111) are separated from each other and arranged side by side along the sliding direction of the locking element (112), each of the ISOFIX connectors (111) corresponds to one locking element (112), one elastic restoring element (116), one first fixing seat (117), one traction element (114) and one wire sleeve, and all of locking elements (112), elastic restoring elements (116) and first fixing seats (117) are located in a space enclosed by the two ISOFIX connectors, two second embedded fixing cavities (118a) of the second fixing seat (118) are provided, and the second end (115b) of each of wire sleeves is assembled in a corresponding one of the second embedded fixing cavities (118a).
28. The child safety seat (1) according to aspect 27, wherein two first fixing seats (117) are symmetrically arranged with the second fixing seat (118) as a center.
29. The child safety seat (1) according to any of aspects 13 to 28, wherein the ISOFIX connector (111) is provided with a plurality of slot structures (111a) arranged at intervals along the telescopic direction of the ISOFIX connector, and the locking element (112) is locked with one of the slot structures (111a) when it is in the first position and unlocked with the one of the slot structures (111a) when it is in the second position.
30. The child safety seat (1) according to any of aspects 13 to 29, further comprising a first reinforcing element (120) and a second reinforcing element (121), a first end (119a) of the intermediate synchronizing element (119) fixedly supports one of the two ISOFIX connectors (111) from below, and a second end (119b) of the intermediate synchronizing element (119) fixedly supports the other of the two ISOFIX connectors from below, the first reinforcing element (120) penetrates through the base (20), the intermediate synchronizing element (119) and the ISOFIX connector (111) supported by the first end (119a) of the intermediate synchronizing element (119) along the sliding direction of the locking element (112), the second reinforcing element (121) penetrates through the base (20), the intermediate synchronizing element (119) and the ISOFIX connector (111) supported by the second end (119b) of the intermediate synchronizing element (119) along the sliding direction of the locking element (112), and the base (20) is provided with a first avoidance slip groove (120a) configured for the first reinforcing element (120) to penetrate through and provide avoidance, and a second avoidance slip groove (121a) configured for the second reinforcing element (121) to penetrate through and providing avoidance.
31. The child safety seat (1) according to aspect 30, further comprising a first connecting block (122) and a second connecting block (123) located between the two ISOFIX connectors (111) along the sliding direction of the locking element (112), and the first reinforcing element (120) penetrates through the first connecting block (122), and the second reinforcing element (121) penetrates through the second connecting block (123).
32. The child safety seat (1) according to aspect 31, wherein each of the first connecting block (122) and the second connecting block (123) is connected and assembled with the intermediate synchronizing element (119) through a first screw (124), the first connecting block (122) locks the first reinforcing element (120) through a second screw (125), and the second connecting block (122) locks the second reinforcing element (121) through a third screw (126).
33. The child safety seat (1) according to any of aspect 31 or aspect 32, wherein a part of the intermediate synchronizing element (119) between the first end (119a) and the second end (119b) thereof has an inverted U-shaped structure, and the first connecting block (122) and the second connecting block (123) are located in a space of the inverted U-shaped structure.
34. The child safety seat (1) according to aspect 10 or any aspect dependent thereon, wherein the ISOFIX connector (111) is configured to slide out or slide into a rear end of the base (20) along the front-back direction of the base (20).
35. The child safety seat (1) according to aspect 10 or any aspect dependent thereon, wherein a shape of the avoidance space (119c) corresponds to that of the accommodating space.

## Claims

1. A child safety seat (1) comprising:
a base (20);
a supporting leg (30) movably assembled on the base (20), the supporting leg (30) comprising a stand (310) and a sliding seat (320) slidably disposed on the base (20), and the stand (310) being pivotally connected relative to the sliding seat (320) and having an unfolded position and a folded position; and
an ISOFIX assembly (10) comprising: two ISOFIX connectors (111) telescopically and slidably assembled on both sides of the base (20), and a telescopic adjusting mechanism (100),
wherein the telescopic adjusting mechanism (100) comprises:
a link assembly (10a, 10a') installed on the base (20);
a locking element (112) disposed on the link assembly (10a, 10a') and capable of moving relative to the base (20) between a first position and a second position, wherein the two ISOFIX connectors (111) are locked relative to the base (20) by the locking element (112) when the locking element (112) is in the first position, and the two ISOFIX connectors (111) are slidable relative to the base (20) when the locking element (112) is in the second position;
a pair of unlocking operating elements (113, 113') disposed on left and right sides of the base (20), respectively, the link assembly (10a, 10a') being connected between the locking element (112) and the pair of unlocking operating elements (113, 113'), wherein the locking element (112) is switched between the first position and the second position via the link assembly (10a, 10a') when one of the pair of unlocking operating elements (113, 113') is operated.

2. The child safety seat (1) according to claim 1, wherein the supporting leg (30) is configured to slide along a front-back direction of the base (20), the stand (310) is switched between the unfolded position and the folded position by moving the sliding seat (320) relative to the base (20) forwards and backwards;
optionally, the base (20) has an accommodating space for accommodating the stand (310) in the folded position, and the stand (310) is configured to slide along the front-back direction of the base (20) in the accommodating space when it is in the folded position;
optionally, the accommodating space is an accommodating recess (250) recessed from an underside of the base (20); and/or
a cross section of the accommodating space in a direction perpendicular to the base (20) is in an inverted U-shape.

3. The child safety seat (1) according to claim 1 or 2, further comprising:
a fixing bracket (230) erected on the base (20);
a stroke enlarging structure (330) having an X-shaped cross-folding mechanism, an end of which is installed on the fixing bracket, and the other end of which is installed on the sliding seat (320); and
a tension spring (340) disposed between the base (20) and the sliding seat (320), and having a tendency to pull the sliding seat (320) outwards.

4. The child safety seat (1) according to any one of claims 1 to 3, wherein the ISOFIX assembly (10) further comprises:
an intermediate synchronizing element (119) fixed between the two ISOFIX connectors (111) to enable the two ISOFIX connectors (111) move synchronously, and having an avoidance space (119c) for accommodating the supporting leg (30) in a folded state.

5. The child safety seat (1) according to claim 4, wherein the avoidance space (119c) is formed by arching a middle part of the intermediate synchronizing element (119) upwards, a shape of the avoidance space (119c) corresponds to that of the accommodating space; and/or
the intermediate synchronizing element (119) is in an inverted U-shape, and forms the avoidance space at its middle part.

6. The child safety seat (1) according to any one of claims 1 to 5, wherein the link assembly (10a, 10a') is disposed above a base bracket (220) of the base (20) to avoid the supporting leg (30) in a folded state.

7. The child safety seat (1) according to any one of claims 1 to 6, wherein a sliding direction of the two ISOFIX connectors (111) and a moving direction of the locking element (112) are perpendicular to each other, the ISOFIX connector (111) is provided with a plurality of slot structures (111a) arranged at intervals along the telescopic direction of the ISOFIX connector, and the locking element (112) is locked with one of the slot structures (111a) when it is in the first position and unlocked with the one of the slot structures (111a) when it is in the second position.

8. The child safety seat (1) according to any one of claims 1 to 7, wherein the telescopic adjusting mechanism (100) further comprises an elastic restoring element (116, 116') disposed between the base (20) and the locking element (112), and having a tendency to drive the locking element (112) to be switched to the first position, and optionally,
the unlocking operating element (113') comprises a first unlocking operating element (113'a) and a second unlocking operating element (113'b) symmetrically disposed on both sides of the base (20),
the locking element (112) moves from the first position to the second position when the unlocking operating element (113') is driven, so as to allow positions of the two ISOFIX connectors (111) relative to the base (20) to be adjusted, and
the locking element (112) returns to the first position under an action of the elastic restoring element (116') when the unlocking operating element (113') is released.

9. The child safety seat (1) according to claim 8, wherein when the telescopic adjusting mechanism (100) is assembled in the base (20), an end of the elastic restoring element (116, 116') abuts against a side surface of an accommodating recess (250) recessed in a bottom of a lower cover (202) of the base (20), while another end of the elastic restoring element (116, 116') abuts against an end of the locking element (112).

10. The child safety seat (1) according to claim 8 or 9, wherein the link assembly (10a') comprises a connecting element (101), a linkage portion (102) and a beam (103),
the beam (103) is erected on the base (20) and located between the two ISOFIX connectors (111);
the connecting element (101) is slidably disposed on the beam (103), and comprises a first connecting element (101a) having an end connected with the first unlocking operating element (113'a) and a second connecting element (101b) having an end connected with the second unlocking operating element (113'b); and
the linkage portion (102) is movably disposed on the beam (103), and hinged with the other end of the first connecting element (101a) and the other end of the second connecting element (101b), so that the linkage portion (102) is switched between a retracted state and an expanded state by driving and releasing at least one of the first unlocking operating element (113'a) and the second unlocking operating element (113'b).

11. The child safety seat (1) according to claim 10, wherein the linkage portion (102) is a four-bar linkage mechanism; and/or
the beam (103) is symmetrically provided with sliding grooves along a longitudinal direction each of which is extended transversely, and the other end of the first connecting element (101a) and the other end of the second connecting element (101b) move along corresponding sliding grooves, respectively; and/or
the linkage portion (102) is disposed in a horizontal direction.

12. The child safety seat (1) according to any of claims 8 to 11, wherein the unlocking operating element (113) is movably disposed on the supporting leg (30), and the link assembly (10a) adaptively adjusts during a movement of the supporting leg (30) relative to the base (20), so that the unlocking operating element (113) is linked with the locking element (112) and enables the locking element (112) to be switched between the first position and the second position via the link assembly (10a);
optionally, the link assembly comprises:
a traction element (114) connected between the unlocking operating element (113) and the locking element (112), and deformed during the movement of the supporting leg (30) relative to the base (20); and
a holder (115) configured to tighten deformation of the traction element (114), so that the unlocking operating element (113) is linked with the locking element (112) and enables the locking element (112) to be switched from the first position to the second position via the traction element (114) with assistance of the holder (115).

13. The child safety seat (1) according to claim 12, wherein the holder (115) is a wire sleeve having a first end (115a) fixedly connected with the base (20) and a second end (115b) fixedly connected with the supporting leg (30), the traction element (114) slidably penetrating through the wire sleeve, an end of the traction element (114) extending out of the wire sleeve and assembled with the locking element (112), and the other end of the traction element (114) extending out of the wire sleeve and assembled with the unlocking operating element (113), and both of the traction element (114) and the wire sleeve are synchronously deformed during the movement of the supporting leg (30) relative to the base (20), and optionally,
the holder (115) is a pivoting biasing structure that biases the traction element (114), and the pivoting biasing structure is pivotally assembled on the base (20) and biases a part of the traction element (114) between the unlocking operating element (113) and the locking element (112) from a single side.

14. The child safety seat (1) according to claim 13, wherein the ISOFIX assembly (10) further comprises a first fixing seat (117) assembled on the base (20) and a second fixing seat (118) assembled on the supporting leg (30), the first fixing seat (117) is separated from the second fixing seat (118) along a telescopic direction of the ISOFIX connector (111) and a sliding direction of the locking element (112) respectively, the first fixing seat (117) is provided with an embedded avoidance cavity (117a) arranged along the sliding direction of the locking element (112), a first embedded fixing cavity (117b) obliquely arranged relative to the telescopic direction of the ISOFIX connector (111), and a middle channel (117c) communicating the embedded avoidance cavity (117a) and the first embedded fixing cavity (117b), the second fixing seat (118) is provided with a second embedded fixing cavity (118a), the elastic restoring element (116) is placed in the embedded avoidance cavity (117a), a first end (115a) of the wire sleeve is assembled in the first embedded fixing cavity (117b), and a second end (115b) of the wire sleeve is assembled in the second embedded fixing cavity (118a), and a part of the traction element (114) extending out of the first end (115a) of the wire sleeve penetrating through the middle channel (117c) ; optionally,
the second embedded fixing cavity (118a) comprises a straight segment (1181) arranged along the telescopic direction of the ISOFIX connector (111) and an inclined portion (1182) obliquely arranged relative to the telescopic direction of the ISOFIX connector (111) and communicated with the straight segment (1181), the inclined portion (1182) is located between the straight segment (1181) and the first fixing seat (117) along the telescopic direction of the ISOFIX connector (111); and/or
the two ISOFIX connectors (111) are separated from each other and arranged side by side along the sliding direction of the locking element (112), each of the ISOFIX connectors (111) corresponds to one locking element (112), one elastic restoring element (116), one first fixing seat (117), one traction element (114) and one wire sleeve, and all of locking elements (112), elastic restoring elements (116) and first fixing seats (117) are located in a space enclosed by the two ISOFIX connectors, two second embedded fixing cavities (118a) of the second fixing seat (118) are provided, and the second end (115b) of each of wire sleeves is assembled in a corresponding one of the second embedded fixing cavities (118a), and optionally, two first fixing seats (117) are symmetrically arranged with the second fixing seat (118) as a center.

15. The child safety seat (1) according to claim 4 or 5, the child safety seat (1) further comprising a first reinforcing element (120) and a second reinforcing element (121), a first end (119a) of the intermediate synchronizing element (119) fixedly supports one of the two ISOFIX connectors (111) from below, and a second end (119b) of the intermediate synchronizing element (119) fixedly supports the other of the two ISOFIX connectors from below, the first reinforcing element (120) penetrates through the base (20), the intermediate synchronizing element (119) and the ISOFIX connector (111) supported by the first end (119a) of the intermediate synchronizing element (119) along the sliding direction of the locking element (112), the second reinforcing element (121) penetrates through the base (20), the intermediate synchronizing element (119) and the ISOFIX connector (111) supported by the second end (119b) of the intermediate synchronizing element (119) along the sliding direction of the locking element (112), and the base (20) is provided with a first avoidance slip groove (120a) configured for the first reinforcing element (120) to penetrate through and provide avoidance, and a second avoidance slip groove (121a) configured for the second reinforcing element (121) to penetrate through and providing avoidance; optionally,
the child safety seat (1) further comprising a first connecting block (122) and a second connecting block (123) located between the two ISOFIX connectors (111) along the sliding direction of the locking element (112), and the first reinforcing element (120) penetrates through the first connecting block (122), and the second reinforcing element (121) penetrates through the second connecting block (123), and optionally,
a part of the intermediate synchronizing element (119) between the first end (119a) and the second end (119b) thereof has an inverted U-shaped structure, and the first connecting block (122) and the second connecting block (123) are located in a space of the inverted U-shaped structure.
